# EUROPÄISCHE PATENTSCHRIFT

(11) **EP 2 981 948 B1**
(45) Veröffentlichungstag und Bekanntmachung des Hinweises auf die Patenterteilung: **08.06.2022**
(21) Anmeldenummer: 14718323.0
(22) Anmeldetag: 03.04.2014
(51) Int. Cl.: G07D 7/04

(54) **PRÜFUNG EINES MIT MAGNETMATERIALIEN VERSEHENEN SICHERHEITSELEMENTS**
INSPECTION OF A SECURITY ELEMENT PROVIDED WITH MAGNETIC MATERIALS
CONTRÔLE D'UN ÉLÉMENT DE SÉCURITÉ CONTENANT DES MATÉRIAUX MAGNÉTIQUES

(30) Priorität: 03.04.2013 DE 102013205891
(43) Veröffentlichungstag der Anmeldung: 10.02.2016
(73) Patentinhaber: Giesecke+Devrient Currency Technology GmbH, 81677 München (DE)
(72) Erfinder: PAUL, Elisabeth, 83064 Raubling (DE); STÖCKLI, Armin, CH-3063 Ittigen (CH)
(74) Vertreter: Giesecke + Devrient IP
(86) Internationale Anmeldenummer: PCT/EP2014/000890
(87) Internationale Veröffentlichungsnummer: WO 2014/161668

(56) Entgegenhaltungen:
- DE-A1-102011 106 263
- DE-A1-102011 110 138
- US-A1- 2012 160 632
- None

## Beschreibung

Die vorliegende Erfindung betrifft ein Verfahren und eine Vorrichtung zum Prüfen eines Sicherheitselements, das mit mehreren Magnetmaterialien von unterschiedlicher Koerzitivfeldstärke versehen ist.

Aus der DE 10 2011106 263 A1 ist ein Prüfverfahren zum Prüfen derartiger Sicherheitselemente bekannt. Dabei sind die zu prüfenden Sicherheitselemente in unterschiedlichen Bereichen mit einem ersten Magnetmaterial mit einer ersten Koerzitivfeldstärke und einem zweiten Magnetmaterial mit einer zweiten Koerzitivfeldstärke, die kleiner ist als die erste Koerzitivfeldstärke, versehen. In manchen Bereichen sind auch beide Magnetmaterialien gemeinsam vorgesehen. Diese Bereiche bilden einen magnetischen Code, der geprüft werden kann.

Zur Prüfung ist vorgesehen, das Sicherheitselement zunächst einem ersten, stärkeren Magnetfeld auszusetzen, das stark genug ist, beide Magnetmaterialien in eine erste Richtung zu magnetisieren, d.h., das eine Magnetfeldstärke aufweist, die größer ist, als die beiden zuvor genannten Koerzitivfeldstärken. Anschließend wir das Sicherheitselement einem zweiten, schwächeren Magnetfeld ausgesetzt, das eine Magnetfeldstärke aufweist, die kleiner ist als die erste Koerzitivfeldstärke und größer ist als die zweite Koerzitivfeldstärke und dementsprechend die Magnetisierung des zweiten Magnetmaterials in eine andere Richtung ausrichtet, als die Magnetisierungsrichtung des ersten Magnetmaterials. Dann wird die Magnetisierung des Sicherheitselements ortsaufgelöst gemessen. Aus dem dabei erfassten Magnetsignal wird dann abgeleitet, wo sich Magnetbereiche, die nur das erste Magnetmaterial aufweisen, und Magnetbereiche, die nur das zweite Magnetmaterial aufweisen, befinden. Von den beiden verschiedenen Magnetbereichen werden Magnetsignale (z.B. magnetische Flussdichten oder dazu proportionale Signale) erfasst, die im Wesentlichen invers zueinander sind (d.h. Signale mit entgegengesetztem Vorzeichen).

Wenn sich die Magnetmaterialien der zuvor genannten beiden Typen überlappen, d.h. einen kombinierten Magnetbereich bilden, der beide Magnetmaterialien aufweist, können sich ihre Magnetsignale dementsprechend gegenseitig vollständig oder nahezu vollständig auslöschen, so dass derartige kombinierte Magnetbereiche nicht detektiert werden.

Dieses Problem wird in der DE 10 2011 106 263 dadurch gelöst, dass das Sicherheitselement anschließend noch in eine dritte Magnetisierungsrichtung magnetisiert wird und weitere Magnetsignale erfasst werden, an Hand derer auch die zuvor genannten kombinierten Magnetbereiche zuverlässig detektierbar sind. Dadurch wird das Prüfverfahren allerdings aufwändig.

Ferner ist aus der DE10 2011 110 138 A1 eine Vorrichtung zum Prüfen magnetischer Sicherheitselemente bekannt, welche eine Magnetisierungseinheit aufweist, die magnetisierbare Bereiche mit einem Magnetfeld einer ersten Richtung magnetisiert und eine Sensoreinheit welche ein Stützfeld in einer zweiten von der ersten verschiedenen Richtung erzeugt um weichmagnetische Bereiche zu magnetisieren und welche die Magnetsignale sowohl von weichmagnetischen als auch von hartmagnetischen Bereichen eines Dokuments erfasst.

Aufgabe der vorliegenden Erfindung ist es folglich, ein Verfahren und eine Vorrichtung vorzuschlagen, die es ermöglichen, die zuvor beschriebenen kombinierten Magnetbereiche weniger aufwendig zu detektieren.

Bei dem erfindungsgemäßen Verfahren wird wie bei dem Stand der Technik ein Sicherheitselement geprüft, das ein erstes Magnetmaterial mit einer ersten, größeren Koerzitivfeldstärke, und ein zweites Magnetmaterial mit einer zweiten, kleineren Koerzitivfeldstärke aufweist. Das Sicherheitselement umfasst zumindest einen ersten Magnetbereich, der das erste, nicht aber das zweite Magnetmaterial aufweist, und einen zweiten Magnetbereich, der das zweite und nicht das erste Magnetmaterial aufweist. Darüber hinaus kann das Sicherheitselement auch noch zumindest einen dritten Magnetbereich umfassen, der beide Magnetmaterialien aufweist.

Bei dem Verfahren wird das Sicherheitselement wie bei dem Stand der Technik zunächst einem ersten Magnetfeldbereich ausgesetzt, in dem die beiden Magnetmaterialien in eine erste Magnetisierungsrichtung vormagnetisiert werden. Dazu muss in diesem Bereich eine erste Magnetfeldstärke vorliegen, die sowohl größer ist als die erste Koerzitivfeldstärke als auch größer ist als die zweite Koerzitivfeldstärke. Vorzugsweise ist sie mindestens 1,5, noch bevorzugter mindestens 1,75 oder sogar mindestens 2-mal so groß wie die größere der beiden Koerzitivfeldstärken. Als Magnetfeldbereich wird im Zusammenhang mit der vorliegenden Erfindung ein zusammenhängender Bereich eines von einer Magnetisierungsvorrichtung erzeugten Gesamtmagnetfelds bezeichnet.

Anschließend wird das Sicherheitselement einem zweiten Magnetfeldbereich ausgesetzt, wodurch das zweite Magnetmaterial in eine zweite Magnetisierungsrichtung ausgerichtet wird, die sich von der ersten Magnetisierungsrichtung unterscheidet. In dem zweiten Magnetfeldbereich liegt dementsprechend eine zweite Magnetfeldstärke vor, die größer ist, als die zweite Koerzitivfeldstärke. Überdies ist die Magnetfeldstärke überall in dem zweiten Magnetfeldbereich kleiner als die erste Koerzitivfeldstärke, so dass das erste Magnetmaterial nicht in die zweite Magnetisierungsrichtung ausgerichtet wird, sondern (zumindest im Wesentlichen) in die erste Magnetisierungsrichtung magnetisiert bleibt.

Erfindungsgemäß wird nun zum Prüfen des Sicherheitselements ein Magnetsignal, welches von einem oder mehreren Magnetbereichen ausgeht, genau dann erfasst, wenn das Sicherheitselement und somit der betreffende Magnetbereich, von dem das Magnetsignal ausgeht, dem zweiten Magnetfeldbereich und somit der zweiten Magnetfeldstärke ausgesetzt ist. Danach wird das erfasste Magnetsignal ausgewertet. Dabei wird aus dem erfassten Magnetsignal, ohne dass dazu weitere Magnetsignale des betreffenden Magnetbereichs erfasst und ausgewertet werden, abgeleitet, ob der betreffende Magnetbereich das erste Magnetmaterial oder das zweite Magnetmaterial oder ggf. beide Magnetmaterialien aufweist. Es wird also der Magnetbereichstyp ermittelt. Vorzugsweise wird auch die Position des betreffenden Magnetbereichs ermittelt.

Die Erfindung basiert auf der Erkenntnis, dass sich der Absolutbetrag des Magnetsignals (z.B. einer gemessenen magnetischen Flussdichte oder eines dazu proportionalen Signals) des zweiten Magnetmaterials stärker von dem Absolutbetrag des Magnetsignals des ersten Magnetmaterials unterscheidet, solange das Sicherheitselement noch der zweiten Magnetfeldstärke ausgesetzt ist.

Dementsprechend können mit dem erfindungsgemäßen Verfahren, wenn es gewünscht ist und eine Auswerteeinrichtung entsprechend eingerichtet ist, auch die dritten (kombinierten) Magnetbereiche detektiert werden, da sich die Magnetsignale der beiden Magnetmaterialien in ihrem Absolutbetrag deutlich unterscheiden, so dass sie sich bei ihrer Überlagerung nicht auslöschen, selbst wenn sie ggf. inverse Vorzeichen haben.

Gemäß der Erfindung ist die Koerzitivfeldstärke des zweiten Magnetmaterials geringer als die des ersten Magnetmaterials. Dabei sind vorzugsweise beide Koerzitivfeldstärken deutlich größer als Null. Beispielsweise kann die Koerzitivfeldstärke des zweiten Magnetmaterials zumindest 4, 8 oder 16 kA/m betragen (ca. 50,100 bzw. 200 Oe (Oersted)). Allerdings kann das zweite Magnetmaterial auch ein weichmagnetisches Magnetmaterial sein, worunter vorliegend ein Magnetmaterial mit einer Koerzitivfeldstärke, die Null oder nahezu Null beträgt, verstanden wird, und das erste Magnetmaterial ein beliebiges Magnetmaterial mit einer im Vergleich dazu größeren Koerzitivfeldstärke (nicht-weichmagnetisches Material). Dabei muss die Magnetfeldstärke des zweiten Magnetfeldbereichs natürlich dennoch signifikant größer als Null sein und kann beispielsweise zumindest ein Fünfhundertstel oder ein Zweihundertstel oder ein Hundertstel der Magnetfeldstärke des ersten Magnetfeldbereichs betragen.

Wie zuvor beschrieben, wird das Sicherheitselement zunächst einem ersten Magnetfeldbereich ausgesetzt, in dem die beiden Magnetmaterialien in eine erste Magnetisierungsrichtung vormagnetisiert werden. Vorzugsweise wird das Sicherheitselement anschließend dem zweiten Magnetfeldbereich derart vormagnetisiert ausgesetzt. "Derart vormagnetisiert" bedeutet, dass das Sicherheitselement, bevor es dem zweiten Magnetfeldbereich ausgesetzt wird, keinem zwischen dem ersten und dem zweiten Magnetfeldbereich liegenden weiteren Magnetfeldbereich eines anderen Magnetfelds ausgesetzt und dabei durch diesen ummagnetisiert wird.

Eine erfindungsgemäße Prüfvorrichtung zum Prüfen des Sicherheitselements besitzt dementsprechend eine Transportstrecke, entlang der das Sicherheitselement in einer Transportrichtung bewegbar ist, eine Magnetisierungsvorrichtung, einen Sensor und eine Auswerteeinrichtung.

Die Magnetisierungsvorrichtung stellt den ersten Magnetfeldbereich mit der ersten Magnetfeldstärke in einem ersten Bereich der Transportstrecke bereit, um damit die beiden Magnetmaterialien in dem ersten Magnetfeldbereich in die erste Magnetisierungsrichtung zu magnetisieren. Die Magnetisierungsvorrichtung stellt überdies den entlang der Transportstrecke auf den ersten Magnetfeldbereich folgenden zweiten Magnetfeldbereich mit der zweiten Magnetfeldstärke, die (dem Absolutbetrag nach) kleiner ist als die erste Magnetfeldstärke und die zudem größer ist als die zweite Koerzitivfeldstärke des zweiten Magnetmaterials und kleiner als die erste Koerzitivfeldstärke des ersten Magnetmaterials, bereit. Somit kann das Sicherheitselement entlang der Transportstrecke von dem ersten in den nachfolgenden zweiten Magnetfeldbereich bewegt werden, um das in dem ersten Magnetfeldbereich vormagnetisierte zweite Magnetmaterial in dem zweiten Bereich in die zweite, sich von der ersten Magnetisierungsrichtung unterscheidende Magnetisierungsrichtung um zu magnetisieren.

Der Sensor erfasst das Magnetsignal von zumindest einem der Magnetbereiche des Sicherheitselements. Er ist zu diesem Zweck eingerichtet, Magnetsignale zu erfassen, die von dem zweiten Magnetfeldbereich ausgehen, d.h. das Magnetsignal wird erfasst, während sich das Sicherheitselement in dem zweiten Magnetfeldbereich befindet und der zweiten Magnetfeldstärke ausgesetzt ist. Der Sensor der Prüfvorrichtung erfasst dementsprechend Magnetsignale, die von einem zweiten Bereich der Transportstrecke ausgehen, auf den der zweite Magnetfeldbereich wirkt.

Das erfasste Magnetsignal wird dann von der Auswerteeinrichtung wie zuvor beschrieben ausgewertet.

Gemäß einer bevorzugten Ausführungsform liegt dabei der zweite Magnetfeldbereich in einem Kernbereich des von der Magnetisierungsvorrichtung (oder einer entsprechenden zweiten Magnetisierungseinrichtung) erzeugten Gesamtmagnetfelds. Dies ermöglicht einen unkomplizierten und einfach zu realisierenden Aufbau der verwendeten Vorrichtung und führt zu zuverlässigen Ergebnissen.

Als Kernbereich wird dabei der Bereich bezeichnet, in dem das Gesamtmagnetfeld eine lokale oder globale Maximalmagnetfeldstärke annimmt, z.B. eine lokale Maximalmagnetfeldstärke des Gesamtmagnetfelds in Bezug auf die Transportstrecke, entlang derer das Sicherheitselement bewegbar ist. Beispielsweise kann in dem Kernbereich eine Magnetfeldstärke vorliegen, die überall in dem Kernbereich mindestens 25 %, vorzugsweise mindestens 50 % oder sogar mindestens 75 % der Maximalmagnetfeldstärke beträgt.

Erfindungsgemäß verläuft das Magnetfeld mit der zweiten Magnetfeldstärke in dem zweiten Magnetfeldbereich im Wesentlichen entgegengesetzt zu der ersten Magnetisierungsrichtung. Dadurch wird das zweite Magnetmaterial in eine zweite Magnetisierungsrichtung ausgerichtet, die der ersten Magnetisierungsrichtung im Wesentlichen entgegengesetzt ist. In der Folge besteht ein besonders starker quantitativer Unterschied zwischen den von den beiden Magnetmaterialien erzeugten Magnetsignalen, d.h. diese sind im Wesentlichen invers zueinander und besitzen darüber hinaus einen in der Form ähnlichen Verlauf mit unterschiedlichen Absolutwerten.

Bei dem Erfassen des Magnetsignals, kann die durch die Magnetisierung des Sicherheitselements erzeugte Magnetflussdichte in einer beliebigen Richtung erfasst werden. Gemäß einer bevorzugten Ausführungsform wird bei dem Erfassen des Magnetsignals die von dem Sicherheitselement erzeugte Magnetflussdichte in einer Richtung erfasst, die im Wesentlichen senkrecht zu einer Magnetfeldrichtung des zweiten Magnetfeldbereichs - dem das Sicherheitselement bei dem Erfassen ausgesetzt ist - verläuft. Da in diesem Fall das bei dem Erfassen auf das Sicherheitselement wirkende Magnetfeld im Wesentlichen senkrecht zu der Erfassungsrichtung verläuft, wird das erfasste Magnetsignal höchstens geringfügig durch dieses Magnetfeld beeinflusst, d.h. es wird im Wesentlichen nur das Magnetsignal des Magnetbereichs ohne überlagerte Störsignale erfasst. Dadurch wird die Auswertung des Magnetsignals erleichtert, und der Sensor gerät weniger leicht in Sättigung.

In einer alternativen Ausführungsform wird die von dem Sicherheitselement erzeugte Magnetflussdichte in einer Richtung erfasst, die im Wesentlichen parallel oder antiparallel zu der Magnetfeldrichtung des zweiten Magnetfeldbereichs verläuft. Dadurch kann sich ein einfacher auszuwertender Magnetsignalverlauf ergeben. Insbesondere wenn zudem die Magnetfeldrichtung des bei dem Erfassen auf das Sicherheitselement wirkenden zweiten Magnetfeldbereichs im Wesentlichen entgegengesetzt zu der ersten Magnetisierungsrichtung verläuft, wird von allen drei Magnetbereichstypen ein Signal erfasst, das im Wesentlichen nur aus einem Einzelpeak besteht, dessen Amplitude und ggf. Vorzeichen von dem Magnetbereichstyp abhängt. Vorzugsweise verläuft die Magnetfeldrichtung des zweiten Magnetfeldbereichs im Wesentlichen senkrecht oder im Wesentlichen parallel zu einer Hauptebene des Sicherheitselements. Dies ermöglicht eine besonders einfache Erzeugung des zweiten Magnetfeldbereichs. Insbesondere kann mittels eines Magnetpaars, bestehend aus einem oberhalb und einem unterhalb der Hauptebene angeordneten Magneten der zweite Magnetfeldbereich mit einer parallel zur Hauptebene verlaufenden zweiten Magnetfeldrichtung erzeugt werden, indem man die Magnete so anordnet, dass sich zwei gleichnamige Pole gegenüberstehen. Hingegen kann eine senkrecht zur Hauptebene verlaufende Magnetfeldrichtung erzeugt werden, indem man die Magnete so anordnet, dass sich zwei ungleichnamige Pole gegenüberstehen.

Dasselbe gilt natürlich auch für den ersten Magnetfeldbereich, dessen Magnetfeld bevorzugt ebenfalls senkrecht oder parallel zu der Hauptebene des Sicherheitselements verläuft.

Die beiden Magnetfeldbereiche können mittels separater, d.h. von einander getrennter Magnetisierungseinrichtungen erzeugt werden. Alternativ dazu kann jedoch auch eine Magnetisierungsvorrichtung verwendet werden, die einen auf einer Seite der Transportstrecke angeordnete Permanent- oder Elektromagneten umfasst, der sowohl den ersten als auch den zweiten Magnetfeldbereich erzeugt oder zumindest überwiegend erzeugt, oder die zwei auf gegenüberliegenden Seiten der Transportstrecke angeordnete Permanent- oder Elektromagneten umfasst, die zusammenwirkend sowohl den ersten als auch den zweiten Magnetfeldbereich erzeugen oder zumindest überwiegend erzeugen.

Mit dem Begriff "überwiegend erzeugt" wird dabei ausgedrückt, dass ein entscheidender Teil (z.B. zumindest 50 % oder zumindest 90 %) der jeweiligen Magnetfeldstärken der beiden Magnetfeldbereiche durch den oder die zuvor genannten Magneten erzeugt wird.

Als einzelner Permanentmagnet werden dabei auch mehrere separat geformte, jedoch in Reihe geschaltete Permanentmagnete bezeichnet. Solche in Reihe geschaltete Permanentmagnete können z.B. mit ungleichnamigen Polen direkt aneinander angrenzen oder auch über magnetisch leitende Materialien, insbesondere ferromagnetische Materialien, besonders bevorzugt weichmagnetische Materialien oder Luftspalte mit ungleichnamigen Polen des jeweils nächsten Magneten verbunden sein.

Sowohl bei der vorliegenden Erfindung als auch bei dem eingangs genannten Stand der Technik werden mehrere aufeinander folgende Magnetfeldbereiche mit unterschiedlichen Magnetfeldstärken und Richtungen entlang einer Transportstrecke erzeugt. Die zuvor beschriebene Magnetisierungsvorrichtung kann folglich auch in anderen, nicht erfindungsgemäßen Verfahren vorteilhaft eingesetzt werden und wird daher als selbstständig erfinderisch angesehen.

Die Erfindung umfasst nicht nur das vorgenannte Verfahren und die vorgenannte Prüfvorrichtung sondern betrifft gleichermaßen eine Sensoreinrichtung mit der oben beschriebenen Magnetisierungsvorrichtung. Mit derartigen Sensoreinrichtungen können z.B. bestehende Prüfvorrichtungen nachgerüstet werden. Derartige Sensoreinrichtungen sind selbstständig handelbare Güter. Beim Nachrüsten einer bestehenden Prüfvorrichtung muss im Wesentlichen nur noch die Auswerteeinrichtung der Prüfvorrichtung entsprechend umprogrammiert werden, um das oben beschriebene Verfahren auszuführen.

Eine entsprechende Sensoreinrichtung zum Prüfen eines Sicherheitselements, das mehrere Magnetbereiche mit Magnetmaterialien unterschiedlicher Koerzitivfeldstärke aufweist, umfasst dementsprechend eine Magnetisierungsvorrichtung und einen Sensor.

Die Magnetisierungsvorrichtung der Sensoreinrichtung stellt den ersten Magnetfeldbereich mit der ersten Magnetfeldstärke im ersten Bereich der Transportstrecke, entlang der das Sicherheitselement in einer Transportrichtung bewegbar ist, bereit, und magnetisiert in dem ersten Magnetfeldbereich befindliches Magnetmaterial des zu prüfenden Sicherheitselements in die erste Magnetisierungsrichtung. Überdies stellt die Magnetisierungsvorrichtung den dem ersten Magnetfeldbereich nachgeordneten zweiten Magnetfeldbereich in einem zweiten Bereich der Transportstrecke mit der zweiten Magnetfeldstärke, die kleiner ist als die erste Magnetfeldstärke, bereit und magnetisiert in dem zweiten Magnetfeldbereich befindliches Magnetmaterial des zu prüfenden Sicherheitselements in eine zweite, sich von der ersten Magnetisierungsrichtung unterscheidende Magnetisierungsrichtung. Somit kann das in die erste Magnetisierungsrichtung magnetisierte Magnetmaterial in dem zweiten Magnetfeldbereich in die zweite Magnetisierungsrichtung ausgerichtet werden. Der zweite Magnetfeldbereich liegt dabei, wie zuvor beschrieben, vorzugsweise in einem Kernbereich des von der Magnetisierungsvorrichtung erzeugten Gesamtmagnetfelds.

Der Sensor der Sensoreinrichtung erfasst das Magnetsignal von zumindest einem der Magnetbereiche des zu prüfenden Sicherheitselements. Er ist eingerichtet, Magnetsignale zu erfassen, die von dem zweiten Magnetfeldbereich ausgehen, um das Magnetsignal zu erfassen, während das Sicherheitselement der zweiten Magnetfeldstärke des zweiten Magnetfeldbereichs ausgesetzt ist. Die Magnetisierungsvorrichtung der Sensoreinrichtung umfasst einen auf einer Seite der Transportstrecke angeordneten Permanent- oder Elektromagneten, der sowohl den ersten als auch den zweiten Magnetfeldbereich erzeugt oder zumindest überwiegend erzeugt, oder zwei auf gegenüberliegenden Seiten der Transportstrecke angeordnete Permanent- oder Elektromagnete, die zusammenwirkend sowohl den ersten als auch den zweiten Magnetfeldbereich erzeugen oder zumindest überwiegend erzeugen.

Der eine oder die zwei einander gegenüberliegenden Magnete können mit einer Anordnung aus magnetisch leitfähigem Material verbunden sein, die das Magnetfeld von dem einen bzw. von den zwei einander gegenüberliegenden Magneten zu dem ersten und/oder zu dem zweiten Magnetfeldbereich führt. Der erste und/oder der zweite Magnetfeldbereich werden insbesondere dadurch erzeugt, dass die Magnetfeldlinien des durch den einen oder durch die zwei einander gegenüberliegenden Magnete erzeugten Magnetfelds mit Hilfe der Anordnung aus magnetisch leitfähigem Material, mit der der Magnet bzw. die beiden Magnete Material verbunden sind, von dem einen Magnet bzw. von den zwei einander gegenüberliegenden Magneten zu dem ersten und/oder zu dem zweiten Magnetfeldbereich geführt werden. Der zweite Magnetfeldbereich, in dem sich der Sensor befindet, kann durch zwei einander gegenüberliegende Abschnitte des magnetisch leitfähigen Materials erzeugt werden oder durch einen einzigen, nur einseitig der Transportstrecke angeordneten Abschnitt des magnetisch leitfähigen Materials. Letzteres ist weniger störanfällig gegenüber mechanischen Schwankungen.

Das Sicherheitselement kann z.B. Bestandteil eines Sicherheitspapiers oder Wertdokuments, wie z.B. einer Banknote, einem Scheck, einer Aktie einer Schuldverschreibung oder eines beliebigen sonstigen Wertdokuments, oder eines Sicherheitsartikels, wie z.B. eines Produktidentifikationstags, einer Fahrkarte, eines Tickets, etc. sein.

Weitere Merkmale und Vorteile der Erfindung ergeben sich aus der folgen den Beschreibung erfindungsgemäßer Ausführungsbeispiele sowie weiterer Ausführungsalternativen im Zusammenhang mit den anhängenden Zeichnungen, die schematisch zeigen:
- Fig. 1a:: eine erfindungsgemäße Prüfvorrichtung zum Prüfen eines Sicherheitselements gemäß einer ersten Ausführungsform,
- Fig. 1b, 1c, 1d:: von der Prüfvorrichtung gemäß der ersten Ausführungsform erfasste Magnetsignale,
- Fig. 2a, 2b, 2c:: von einer Prüfvorrichtung gemäß einer zweiten Ausführungsform erfasste Magnetsignale,
- Fig. 3a:: eine erfindungsgemäße Prüfvorrichtung zum Prüfen eines Sicherheitselements gemäß einer dritten Ausführungsform,
- Fig. 3b, 3c, 3d:: von der Prüfvorrichtung gemäß der dritten Ausführungsform erfasste Magnetsignale,
- Fig. 4a, 4b, 4c:: von einer Prüfvorrichtung gemäß einer vierten Ausführungsform erfasste Magnetsignale,
- Fig. 5a:: eine erfindungsgemäße Prüfvorrichtung zum Prüfen eines Sicherheitselements gemäß eines Beispiels welches nicht Teil der Erfindung ist,
- Fig. 5b, 5c, 5d:: von der Prüfvorrichtung gemäß des Beispiels erfasste Magnetsignale,
- Fig. 6a, 6b, 6c:: von einer Prüfvorrichtung gemäß eines weiteren nicht erfindungsgemäßen Beispiels
- Fig.7a:: erfasste Magnetsignale, eine nicht erfindungsgemäße Prüfvorrichtung zum Prüfen eines BeispielsSicherheitselements gemäß eines weiteren
- Fig. 7b, 7c, 7d:: von der Prüfvorrichtung gemäß des Beispiels erfasste Magnetsignale,
- Fig. 8a, 8b, 8c:: von einer Prüfvorrichtung gemäß eines weiteren Beispiels erfasste Magnetsignale,
- Fig. 9:: Schritte des Prüfverfahrens,
- Fig. 10:: Magnetisierungskurven eines hochkoerzitiven und eines niederkoerzitiven Magnetmaterials,
- Fig. 11:: einen Magnetsensor mit integriertem Permanentmagneten,
- Fig. 12a, 12b, 12c, 12d, 12e:: Sensoreinrichtungen, bei denen sowohl der erste Magnetfeldbereich als auch der zweite Magnetfeldbereich mit-tels einem einzelnen oder zwei beidseitig der Transportstrecke T angeordneten Magneten erzeugt wird,
- Fig. 13: eine zu denen der Figuren 12a, 12b, 12c, 12d und 12e analog aufgebaute Sensoreinrichtung, bei der jedoch ein wesentlicher Teil eines Magnetflusses nicht geführt wird und durch das Umfeld der Sensoreinrichtung verläuft,
- Fig. 14a, 14b: eine zu denen der Figuren 12a, 12b, 12c, 12d und 12e analog aufgebaute Sensoreinrichtung, bei der jedoch ein Magnetfluss seitlich der Transportstrecke T geführt wird,
- Fig. 15: eine Sensoreinrichtung, die ähnlich wie eine der der Figuren 12a, 12b, 12c, 12d und 12e aufgebaut ist, und
- Fig. 16: eine weitere Sensoreinrichtung, bei der sowohl der erste Magnetfeldbereich als auch der zweite Magnetfeldbereich mittels einem einzelnen oder zwei beidseitig der Transportstrecke T angeordneten Magneten erzeugt wird.

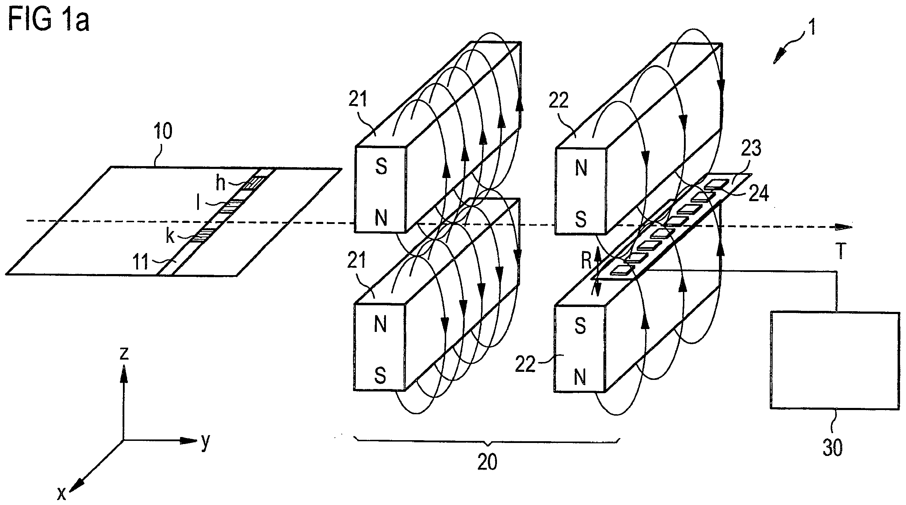

Figur 1a zeigt eine erfindungsgemäße Prüfvorrichtung 1 zum Prüfen eines Wertdokuments 10 mit darauf oder darin angeordnetem Sicherheitselement 11. Das Wertdokument 10 kann z.B. eine Banknote sein und das Sicherheitselement 11 ein darauf applizierter Sicherheitsstreifen oder ein darin eingelagerter Sicherheitsfaden, etwa als Fensterfaden. Das Sicherheitselement 11 weist einen aus einem hochkoerzitiven Magnetmaterial gebildeten hochkoerzitiven Magnetbereich h (entspricht dem oben beschriebenen ersten Magnetbereich), einen aus einem niederkoerzitiven Magnetmaterial gebildeten niederkoerzitiven Magnetbereich 1 (entspricht dem oben beschriebenen zweiten Magnetbereich) und einen aus den beiden zuvor genannten Magnetmaterialien gebildeten kombinierten Magnetbereich k (entspricht dem oben beschriebenen dritten Magnetbereich) auf. Mit den Begriffen "niederkoerzitiv" und "hochkoerzitiv" soll dabei lediglich ausgedrückt werden, dass das hochkoerzitive Magnetmaterial eine größere Koerzitivfeldstärke aufweist als das niederkoerzitive Magnetmaterial. Vorliegend sind die Magnetmaterialien in das Sicherheitselement 11 eingebracht. Alternativ dazu können sie auch in beliebiger Art- und Weise auf das Sicherheitselement 11, das Wertdokument 10 oder einen sonstigen Gegenstand aufgedruckt oder in anderer Weise appliziert sein. Die Magnetbereiche h, l, k können in beliebiger relativer Lage zueinander angeordnet sein.

Die Prüfvorrichtung 1 umfasst eine Sensoreinrichtung 20 sowie eine Auswerteeinrichtung 30. Die Sensoreinrichtung 20 wiederum umfasst in diesem Ausführungsbeispiel eine erste Magnetisierungseinrichtung 21, eine zweite Magnetisierungseinrichtung 22 und einen in x-Richtung ortsauflösenden Magnetsensor 23 (Sensorzeile) mit Sensorelementen 24. Die beiden Magnetisierungseinrichtungen 21 und 22 bilden zusammen eine Magnetisierungsvorrichtung.

Wie zuvor erwähnt, können die Magnetbereiche h, k, l in beliebiger relativer Lage auf dem Wertdokument angeordnet sein. Folglich können sie in einer beliebigen Orientierung zum Sensor 23 und zur y-Richtung, in die das Wertdokument zu dessen Prüfung entlang des Transportpfades T transportiert wird, liegen. Beispielsweise können die Magnetbereiche h, k, l, einen sequentiellen Code eines als Sicherheitselement 11 dienenden Sicherheitsstreifens oder Sicherheitsfadens ausbilden und der Faden oder Streifen kann senkrecht, parallel oder in einem beliebigen anderen Winkel zur Längsrichtung des Sensors 23 liegen. Insbesondere kann sich der Sicherheitsstreifen oder Sicherheitsfaden auch in der y-Richtung, d.h. der Transportrichtung erstrecken. Anstatt des in x-Richtung ortsauflösenden Sensors 23 kann dementsprechend auch ein nicht ortsauflösender Sensor (entsprechend einem einzelnen Sensorelement 24) verwendet werden, der dann dementsprechend nur entlang einer einzelnen Spur Magnetsignale erfassen kann. Dann würde man das Sicherheitselement entlang seiner Längsrichtung prüfen und durch zeitliche Korrelation der Messsignale eine Ortsauflösung der Bereiche h, k, l erhalten. Als Sensorelement 24 kann prinzipiell jeder beliebige Magnetsensor mit einer vorgegebenen Empfindlichkeitsrichtung verwendet werden, insbesondere: ein Hall-Sensor, ein gewöhnlicher induktiver Sensor (d.h. z.B. eine Spule, in der ein Strom induziert wird) oder auch ein beliebiger MR (Magnetoresistance) - Sensor, insbesondere ein GMR (Giant Magnetoresistance) - Sensor oder ein AMR (Anisotropie Magnetoresistance) - Sensor.

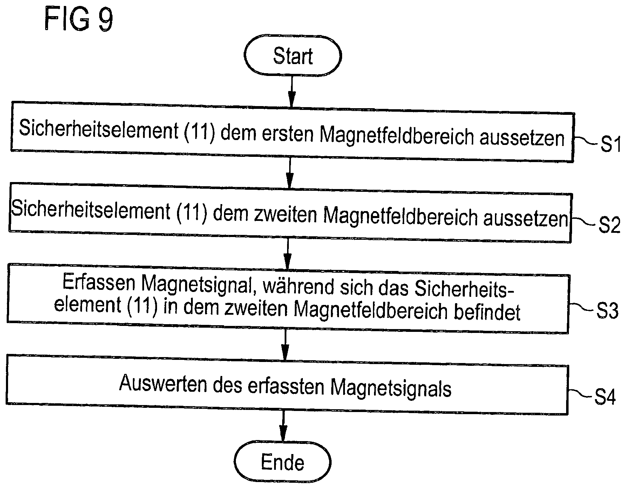

Das erfindungsgemäße Prüfverfahren gemäß Figur 9 wird im Folgenden im Zusammenhang mit der Prüfvorrichtung aus Figur 1a erläutert. Bei dem Verfahren wird das Wertdokument 10 in Figur 1a zu dessen Prüfung entlang des Transportpfades T in y-Richtung transportiert. Dabei werden zunächst alle drei zuvor genannten Magnetbereiche h, k, l durch die aus zwei Permanentmagneten bestehende erste Magnetisierungseinrichtung 21 in positiver y-Richtung magnetisiert (Schritt S1).

Die erste Magnetisierungseinrichtung 21 stellt hierzu einen ersten Magnetfeldbereich in einem ersten Bereich der Transportstrecke T bereit. In Transportrichtung gesehen vor diesem Magnetfeldbereich liegt zunächst ein durch die erste Magnetisierungseinrichtung 21 erzeugter in negativer y-Richtung verlaufender Magnetfeldbereich (nicht dargestellt). Auf diesen folgt der in positiver y-Richtung verlaufende erste Magnetfeldbereich mit einer ersten Magnetfeldstärke, die größer ist als die Koerzitivfeldstärken der beiden Magnetmaterialien. Die zuvor genannte erste Magnetfeldstärke ist mindestens 1,5, vorzugsweise mindestens 1,75 oder sogar mindestens 2 mal so groß wie die größere der beiden Koerzitivfeldstärken der Magnetmaterialien, damit die beiden Magnetmaterialien möglichst stark in die positive y-Richtung dieses ersten Magnetfeldbereichs magnetisiert werden, wobei vorliegend die auf Grund des vorgeordneten in negativer y-Richtung verlaufenden Magnetfeldbereichs vorhandenen Magnetisierungen nahezu vollständig in diese Richtung ausgerichtet werden (Schritt S1 in Fig. 9). Die zweite Magnetisierungseinrichtung 22 umfasst weniger starke Magnete, und stellt den dem ersten Magnetfeldbereich nachgeordneten zweiten Magnetfeldbereich bereit. Vor dem zweiten Magnetfeldbereich wirkt zunächst ein Magnetfeldbereich mit einer in positiver y-Richtung verlaufenden durch die zweite Magnetisierungseinrichtung erzeugten Magnetfeldstärke (nicht gezeigt), die allerdings die in positiver y-Richtung magnetisierten Magnetmaterialien nicht ändert.

In dem nachfolgenden zweiten Magnetfeldbereich herrscht dann ein in negativer y-Richtung verlaufendes Magnetfeld. Die (zweite) Magnetfeldstärke dieses in negativer y-Richtung verlaufenden zweiten Magnetfeldbereichs ist zwar (dem Absolutbetrag nach) größer als die Koerzitivfeldstärke des niederkoerzitiven Magnetmaterials, jedoch kleiner ist als die Koerzitivfeldstärke des hochkoerzitiven Magnetmaterials. Dementsprechend wird durch die zweite Magnetisierungseinrichtung nur das niederkoerzitive Magnetmaterial in die negative y-Richtung ummagnetisiert (Schritt S2 in Fig. 9).

Der Magnetsensor 23 erfasst dann die von den Magnetbereichen h, k, l des Sicherheitselements 11 ausgehenden Magnetsignale, noch während das Sicherheitselement in dem zweiten Magnetfeldbereich der zweiten Magnetfeldstärke ausgesetzt ist (Schritt S3).

Die erfassten Magnetsignale werden anschließend von der Auswerteeinrichtung 30 ausgewertet (Schritt S4), die an Hand des Signalverlaufs, also z.B. an Hand der Signalform und/oder der Signalstärke, den Typ der Magnetbereiche h, k, l ermittelt und an Hand des Signalorts die Anordnung der Magnetbereiche h, k, l auf dem Sicherheitselement 11 bestimmt. Als Auswerteeinrichtung 30 kann z.B. ein Computer mit Analog-Digitalwandler dienen, der das erfasste Signal mit hinterlegten Schwellenwerten vergleicht, die z.B. an Hand von Erfahrungswerten oder Simulationen bestimmt wurden. Das erfasste Signal kann vor dem Schwellenwertvergleich vorverarbeitet werden, z.B. mit Filterungen oder auch Verfahren der Mustererkennung oder anderen geeigneten Algorithmen.

Alternativ oder ergänzend kann die Signalform mit entsprechenden Erfahrungswerten oder simulierten Daten verglichen werden. Bei der Auswertung ist, z.B. durch eine entsprechende Wahl der Schwellenwerte, zu berücksichtigen, dass das Signal eines kombinierten Magnetbereichs stark davon abhängt, mit welchen jeweiligen Flächendichten die beiden Magnetmaterialien übereinander oder miteinander vermischt aufgebracht sind. Das heißt, dass das Signal stark von entsprechenden Fertigungstoleranzen (z.B. Drucktoleranzen bei Bedruckung) abhängen kann. Durch geeignete Trainingsdaten, wie sie üblicherweise bei so genannten Verfahren zum "maschinellen Lernen" ("Machine Learing") eingesetzt werden, können solche Effekte optimal berücksichtigt werden.

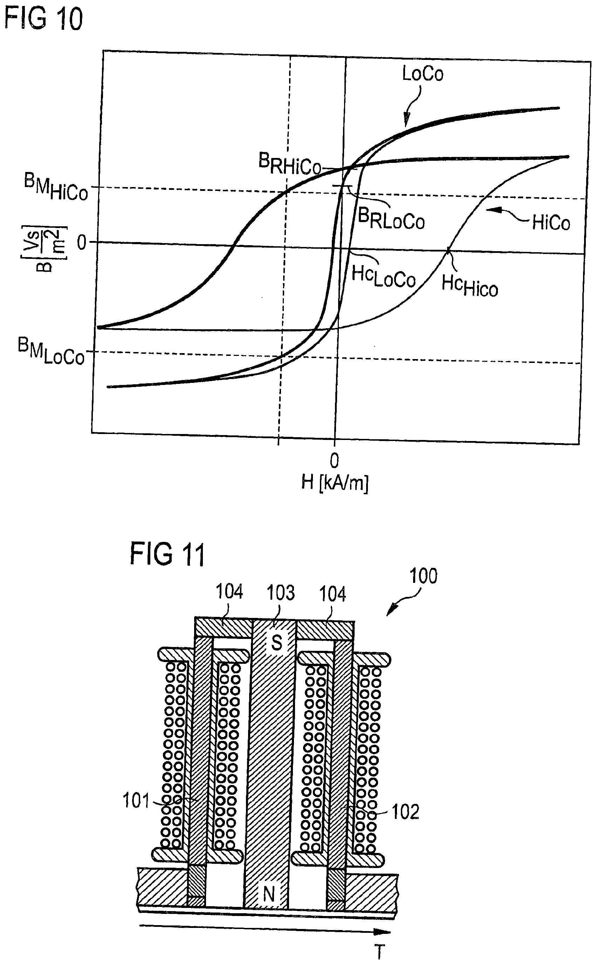

Wie oben erwähnt, erfasst der Sensor 23 die Magnetsignale in dem Schritt S3, noch während sich das zuvor in dem ersten Magnetfeldbereich vormagnetisierte Sicherheitselement 11 in dem zweiten Magnetfeldbereich befindet, durch den das niederkoerzitive Magnetmaterial ummagnetisiert wurde. Dies ermöglicht es, auch kombinierte Magnetbereiche k sicher zu detektieren, wie nachfolgend anhand von Figur 10 erläutert wird. In Figur 10 sind die Magnetisierungskurven des niederkoerzitiven Magnetmaterials, bezeichnet als Lo-Co, und des hochkoerzitiven Magnetmaterials, bezeichnet als HiCo, schematisch dargestellt. Dabei ist die durch das äußere Magnetfeld und das darin befindliche jeweilige Magnetmaterial hervorgerufene magnetische Flussdichte B über der Magnetfeldstärke H des äußeren Magnetfelds (das z.B. in dem ersten oder zweiten Magnetfeldbereich bereitgestellt wird) aufgetragen.

Durch das Einbringen in den ersten Magnetfeldbereich mit der ersten Magnetfeldstärke (Schritt S1), der vorliegend ein positives Vorzeichen zugewiesen wird, werden die beiden Magnetmaterialien vormagnetisiert. Die erste Magnetfeldstärkestärke ist hierfür größer, als die beiden Koerzitivfeldstärken H_{C LoCo} von z.B. 8 bis 32 kA/m (ca. 100-400 Oe (Oersted)) und H_{C HiCo} von z.B. 160 kA/m bis 400 kA/m (ca. 2000 bis 5000 Oe) der beiden Magnetmaterialien. Vorzugsweise ist die entsprechende Magnetfeldstärke mindestens 1,5 oder 1,75 oder sogar 2-mal so groß.

Nachdem das Sicherheitselement 11 wieder aus dem ersten Magnetfeldbereich herausgenommen wurde, bewirken die beiden Magnetmaterialien die Remanenzflussdichten B_{R HiCo} bzw. B_{R LoCo.}

Dann wird das Sicherheitselement der in die entgegengesetzte Richtung weisenden zweiten Magnetfeldstärke des zweiten Magnetfeldbereichs ausgesetzt, die dem Absolutbetrag nach geringer ist und beispielsweise -100 kA/m bis -150 kA/m betragen kann oder auch nur -20 kA/m bis -150 kA/m. Die auf die Magnetmaterialien wirkende äußere zweite Magnetfeldstärke invertiert die Magnetisierung des niederkoerzitiven Materials mit der Koerzitivfeldstärke Hc _{LoCo} nahezu vollständig, während es die Magnetisierung des hochkoerzitiven Materials mit der Koerzitivfeldstärke Hc _{HiCo} nur geringfügig oder je nach verwendetem Material nahezu gar nicht beeinflusst. Wie der Figur entnommen werden kann, unterscheiden sich die Absolutbeträge der sich dabei ergebenden magnetischen Flussdichten BM _{HiCo} und B_{M LoCo} der beiden in dem zweiten Magnetfeldbereich befindlichen Materialien stark voneinander. Dementsprechend kann auch der kombinierte Magnetbereich der Magnetcodierung gut detektiert werden, da sich die Magnetsignale der beiden überlagerten Magnetmaterialien nicht auslöschen. Alle drei Magnetbereiche h, k, l können bereits an Hand der Amplituden und der Vorzeichen der jeweiligen Magnetsignale (d.h. mittels Schwellenwerten) unterschieden werden.

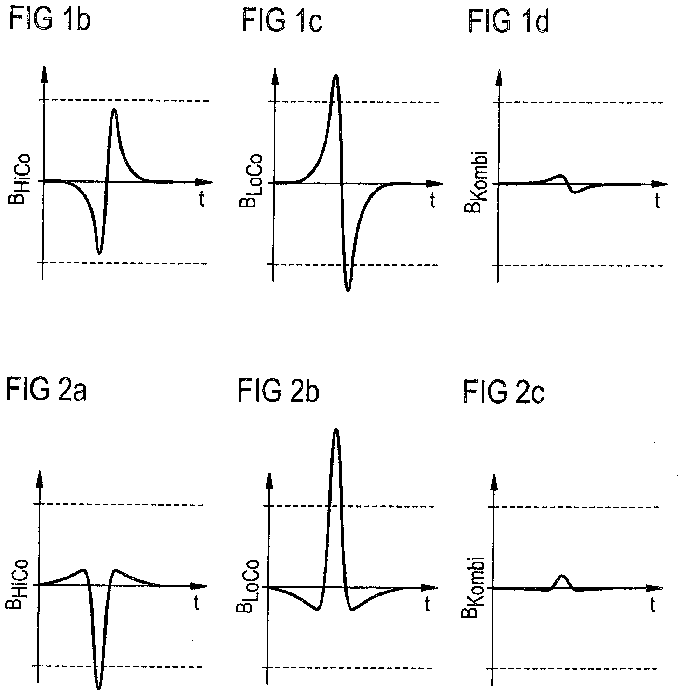

Dies ist genauer aus den Figuren 1b,1c und 1d ersichtlich, in denen entsprechende erfasste Magnetsignale dargestellt sind. Dabei wird vorliegend als Magnetsignal der durch die Magnetisierung des jeweiligen Magnetbereichs am Sensor in Erfassungsrichtung erzeugte magnetische Fluss B erfasst. Alternativ dazu kann z.B. auch ein dazu proportionales Signal erfasst werden. Figur 1b zeigt das Magnetsignal B_{HiCo} des hochkoerzitiven Magnetbereichs h, Fig. 1c das Magnetsignal B_{LoCo} des niederkoerzitiven Magnetbereichs l und Fig. 1d das Magnetsignal B_{Kombi} des kombinierten Magnetbereichs k, wobei im kombinierten Flächenbereich k jeweils 100 % der Flächendichten des hochkoerzitiven Materials und des niederkoerzitiven Materials der Bereiche h und k übereinander gedruckt sind. Die auch in Figur 1a eingezeichnete Erfassungsrichtung R des Sensors verläuft dabei senkrecht zu der Magnetfeldrichtung der Magnetbereichs mit der zweiten Magnetfeldstärke und senkrecht zur Transportebene. Wie aus den Figuren ersichtlich, sind die Magnetsignale des hochkoerzitiven Bereichs h und des niederkoerzitiven Bereichs 1 invers zueinander und unterscheiden sich darüber hinaus in ihrem Absolutbetrag. Bei Überlagerung der beiden Materialien - mit in etwa derselben Flächendichte - löschen sich die Signale dementsprechend nicht vollständig aus, sondern es verbleibt das in Figur 1d dargestellte detektierbare Signal eines kombinierten Magnetbereichs k.

Wenn das Sicherheitselement anschließend aus dem zweiten Magnetfeldbereich herausgenommen wird, weisen beide Magnetmaterialien Remanenzen mit ähnlichem Absolutbetrag auf. Das hochkoerzitive Magnetmaterial wird durch die schwache zweite Magnetfeldstärke bestenfalls geringfügig ummagnetisiert, so dass es nach dem Herausnehmen aus dem zweiten Magnetfeldbereich eine positive Remanenz aufweist, die gleich oder geringfügig kleiner ist als B_{R HiCo}. Das niederkoerzitive Magnetmaterial wird durch die zweite Magnetfeldstärke nahezu vollständig ummagnetisiert, so dass es nach dem Herausnehmen aus dem zweiten Magnetfeldbereich eine negative Remanenz aufweist, deren Absolutbetrag etwas kleiner ist, als der untere Schnittpunkt der Magnetisierungskurve LoCo mit der Hochwertachse. Wie Figur 10 entnehmbar ist, besitzen die beiden Remanenzen dementsprechend in etwa denselben Absolutbetrag und heben sich bei Überlagerung der beiden Materialien - in Abhängigkeit von etwaigen produktionsbedingt schwankenden Materialanteilen - nahezu auf. Dementsprechend wären von den kombinierten Magnetbereichen k ausgehende Magnetsignale in dieser Situation nicht detektierbar. Jedoch können gemäß der erfinderischen Methode, bei der sich das Sicherheitselement bei Detektion der Magnetsignale noch in dem zweiten Magnetfeldbereich befindet, die kombinierten Magnetbereiche relativ gut detektiert werden.

In den Figuren 2a, 2b und 2c sind entsprechende Magnetsignale der drei Magnetbereiche h, k, l für eine Prüfvorrichtung gemäß einer zweiten, nicht explizit dargestellten Ausführungsform dargestellt. Diese Prüfvorrichtung entspricht der Prüfvorrichtung 1 der ersten Ausführungsform, mit dem einzigen Unterschied, dass die Empfindlichkeitsrichtung des Sensors 23 bei der zweiten Ausführungsform parallel zu der zweiten Magnetfeldstärke ist, nämlich in oder entgegen der Transportrichtung T verläuft. Die resultierenden Magnetsignale weisen im Wesentlichen nur einen großen Peak auf, d.h. sie sind weniger komplex als bei der ersten Ausführungsform und daher leichter auszuwerten. Allerdings kann bei der zweiten Ausführungsform die zweite Magnetfeldstärke den Sensor 23 stören, z.B. übersteuern.

Bei der ersten und der zweiten Ausführungsform verlaufen die erste und die zweite Magnetfeldstärke in oder entgegen der y-Richtung und damit parallel zur Transportrichtung T und parallel zur Hauptebene des Wertdokuments 10 bzw. des Sicherheitselements 11 (wobei als Hauptebene die Ebene bezeichnet wird, in der sich das flächige Wertdokument bzw. Sicherheitselement im Wesentlichen erstreckt). Derartige Magnetfelder können, wie dargestellt, mit geringem Aufwand jeweils durch ein einfaches Magnetpaar erzeugt werden.

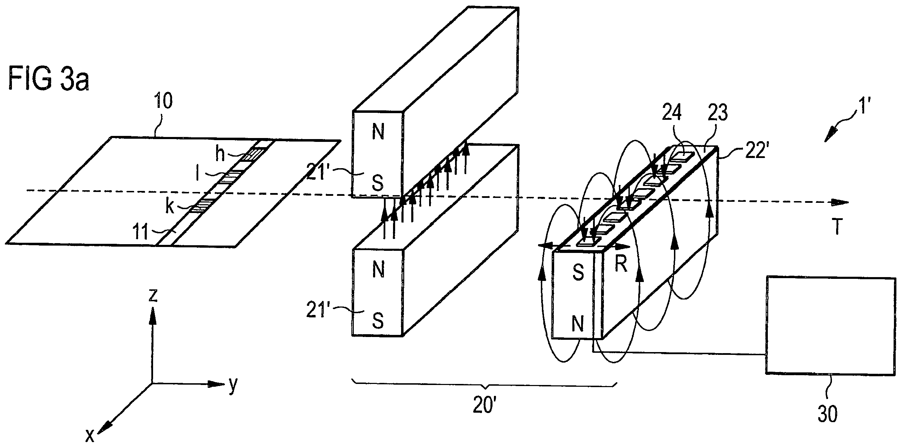

Ebenfalls mit geringem Aufwand kann ein in oder entgegen der z-Richtung verlaufendes Magnetfeld mittels eines Magnetpaares erzeugt werden. In Figur 3a ist eine entsprechende Prüfvorrichtung 1' gemäß einer dritten Ausführungsform dargestellt, bei der die erste Magnetisierungseinrichtung 21' aus einem entsprechenden Magnetpaar besteht, bei dem sich ungleichnamige Pole gegenüberstehen. Die entsprechende Magnetfeldrichtung verläuft dann senkrecht zu der Hauptebene des Sicherheitselements 11 (und des Wertdokuments 10), d.h. in der z-Richtung. Die zweite Magnetisierungseinrichtung 22' umfasst nur einen einzelnen Magneten. Auch wenn in Randbereichen des von diesem Magneten erzeugten Magnetfelds die Magnetfeldrichtung schräg zur z-Achse verläuft, verläuft sie in dem zweiten Magnetfeldbereich, der sich in der Mitte eines Kernbereichs dieses Magnetfelds befindet, im Wesentlichen entgegen der z-Richtung.

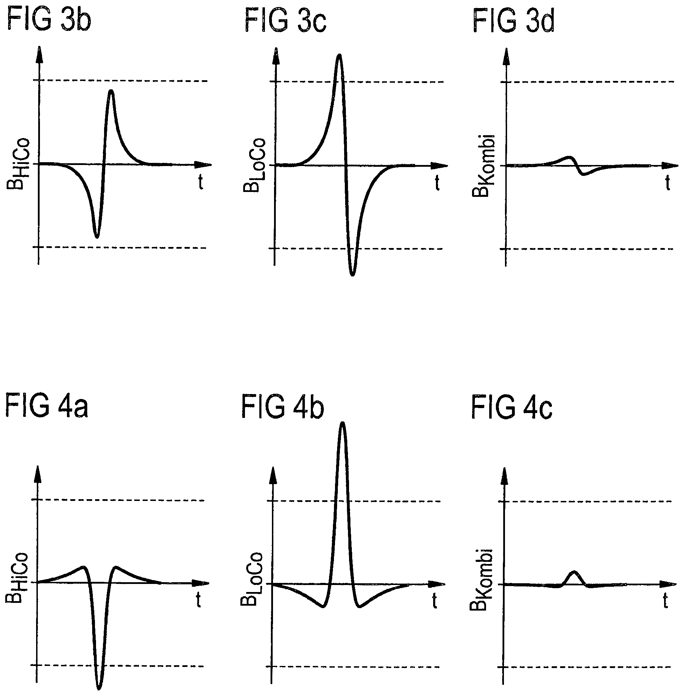

Bei der dritten Ausführungsform gemäß Fig. 3a verläuft die Detektionsrichtung R in Analogie zu der Ausführungsform der Figur 1a senkrecht zu der zweiten Magnetfeldstärke, also hier parallel zur Transportrichtung T. Zudem wird bei der dritten Ausführungsform, analog zu der ersten Ausführungsform, das niederkoerzitive Magnetmaterial in eine Richtung ummagnetisiert, die entgegengesetzt zu der Vormagnetisierungsrichtung verläuft. In der Folge ähneln die resultierenden, in den Figuren 3b, 3c und 3d dargestellten Magnetsignale denen der Figuren 1b, 1c und 1d.

Die Prüfvorrichtung gemäß einer vierten, nicht explizit dargestellten Ausführungsform ist ähnlich wie die der dritten Ausführungsform aufgebaut, mit dem einzigen Unterschied, dass die Detektionsrichtung R parallel zu der zweiten Magnetfeldstärke verläuft. Dementsprechend verläuft bei dieser Ausführungsform in Analogie zu der zweiten Ausführungsform die Richtung der zweiten Magnetfeldstärke entgegengesetzt zu der Vormagnetisierungsrichtung und die Detektionsrichtung R parallel zu der zweiten Magnetfeldstärke. Daher ähneln die resultierenden, in den Figuren 4a, 4b, 4c dargestellten Magnetsignale denen der Figuren 2a, 2b, 2c.

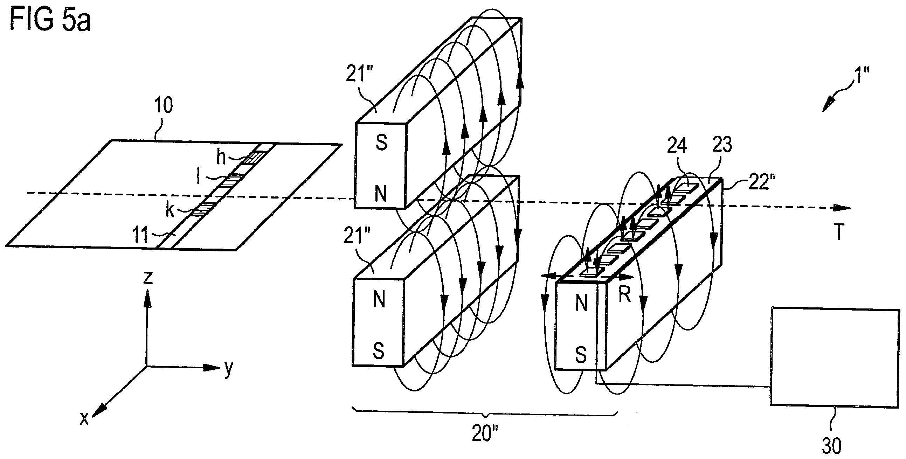

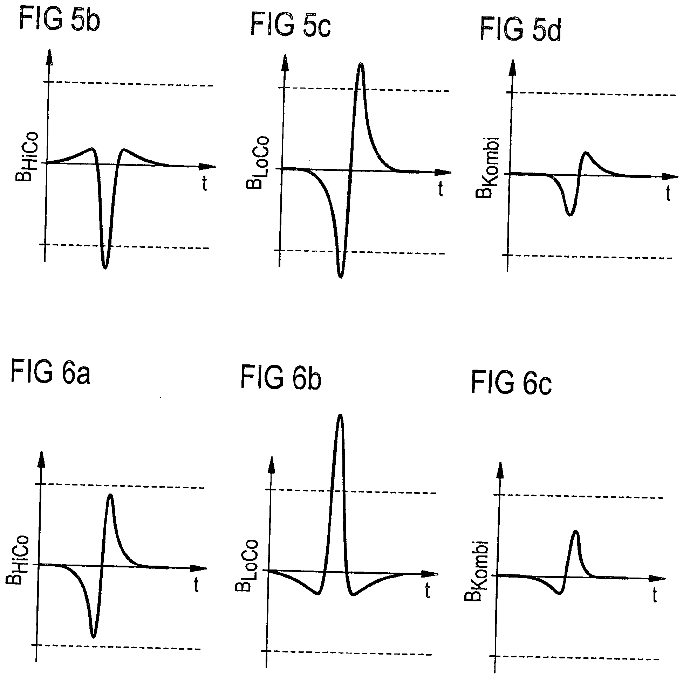

Bei den zuvor beschriebenen Ausführungsformen ist die Richtung der zweiten Magnetfeldstärke stets zu der der ersten Magnetfeldstärke bzw. der Vormagnetisierungsrichtung entgegengesetzt, so dass sich die Absolutwerte der Magnetsignale des hoch- und des niederkoerzitiven Magnetmaterials bzw. der entsprechenden Magnetbereiche h, l stark unterscheiden, die Form der jeweiligen Kurven allerdings nicht. Vielmehr sind die beiden Signale in Ihrem Verlauf stets ähnlich mit umgekehrtem Vorzeichen. In Figur 5a ist ein Beispiel einer nicht erfindungsgemäßen Prüfvorrichtung 1" dargestellt, bei der das während der Prüfung auf die Magnetbereiche einwirkende Magnetfeldbereich mit der zweiten Magnetfeldstärke senkrecht zu der Vormagnetisierungsrichtung verläuft. Dabei besteht die zweite Magnetisierungsanordnung 22" nur aus einem einzelnen Magneten. Das von diesem Magneten erzeugte Magnetfeld weist, wie in der Figur ersichtlich ist, in einem Kernbereich, in dem sich die Sensorelemente des Sensors befinden, im Wesentlichen in die z- Richtung. Diese Orientierung der während der Prüfung auf die Magnetbereiche einwirkenden zweiten Magnetfeldstärke senkrecht zu der Vormagnetisierungsrichtung hat zur Folge, dass sich die in den Figuren 5b und 5c dargestellten (mit einer senkrecht zu der zweiten Magnetfeldstärke - nämlich in oder entgegen der Transportrichtung T - verlaufenden Empfindlichkeitsrichtung R des Magnetsensors 23 erfassten) Magnetsignale des hochkoerzitiven Magnetbereichs h und des niederkoerzitiven Magnetbereichs l des Sicherheitselements in ihrer Form grundlegend unterscheiden. In der Folge ergibt sich auch aus der Überlagerung dieser beiden Signale, wie in Figur 5d dargestellt, ein deutliches Magnetsignal des kombinierten Magnetbereichs k.

Die Figuren 6a, 6b und 6c zeigen entsprechende Magnetsignale für eine Prüfvorrichtung gemäß eines weiteren nicht erfindungsgemäßen Beispiels, das dem vorherigen Beispiel entspricht, bis auf den einzigen Unterschied, dass bei der sechsten Ausführungsform die Empfindlichkeitsrichtung R des Magnetsensors 23 parallel zu dem Magnetfeldbereich mit der zweiten Magnetfeldstärke, d.h. senkrecht zur Transportebene, verläuft.

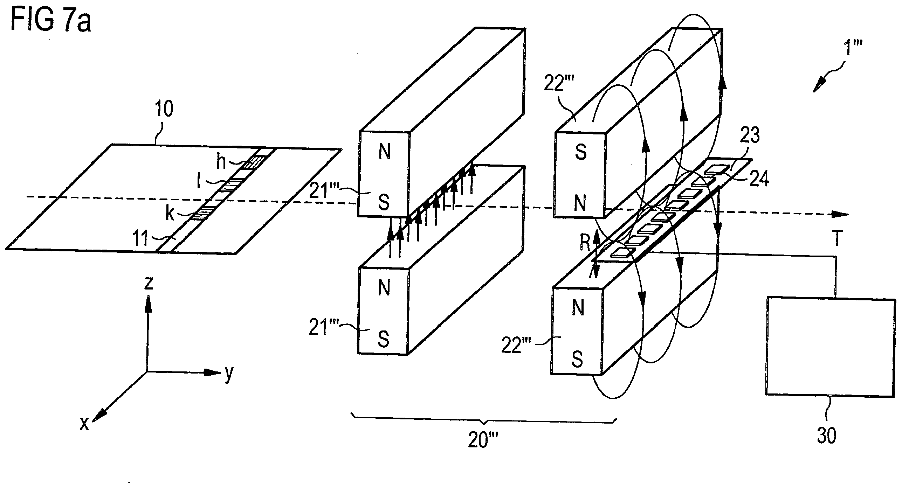

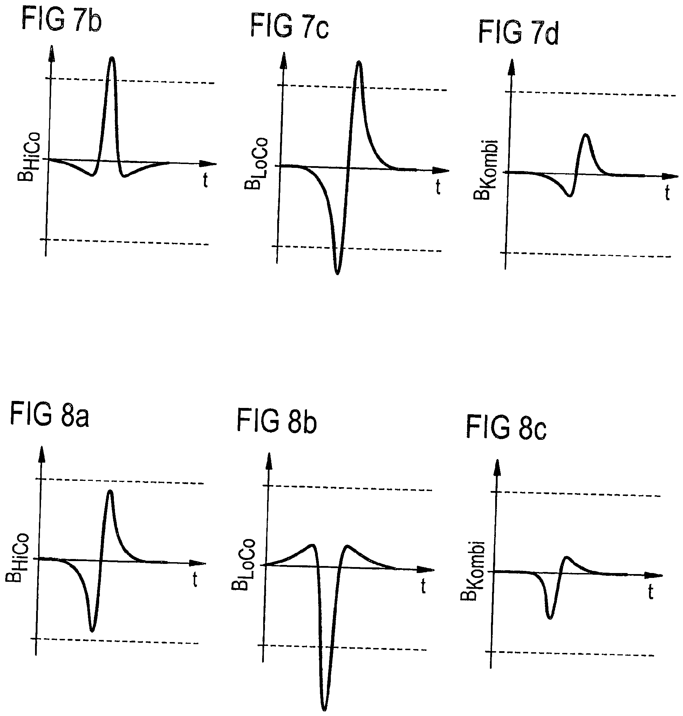

In Figur 7a ist ein weiteres nicht erfindungsgemäßes Beispiel dargestellt, bei dem - analog zu den beiden vorherigen Beispielen die zweite Magnetfeldstärke senkrecht zu der Vormagnetisierungsrichtung verläuft. In den Figuren 7b, 7c und 7d sind die entsprechenden Magnetsignale für eine senkrecht zu der zweiten Magnetfeldstärke - d.h. senkrecht zur Transportebene - verlaufende Detektionsrichtung R dargestellt. In den Figuren 8a, 8b und 8c sind entsprechende Magnetsignale für eine parallel zu der zweiten Magnetfeldstärke - nämlich in oder entgegen der Transportrichtung R - verlaufende, nicht explizit dargestellte alternative Detektionsrichtung R entsprechend eines weiteren nicht erfindungsgemäßen Beispiels dargestellt.

Alle zuvor dargestellten Ausführungsformen sind derart ausgestaltet, dass die beiden Magnetfeldrichtungen der beiden Magnetfeldbereiche senkrecht oder parallel zu der Hauptebene des Sicherheitselements verläuft. Überdies sind die beiden Magnetfeldrichtungen antiparallel. Obwohl diese zuvor aufgezählten Ausrichtungen der Magnetfeldrichtungen relativ zu der Hauptebene des Sicherheitselements bevorzugte Ausführungsformen darstellen, können die beiden Magnetfeldrichtungen beliebig relativ zu der Hauptebene des Sicherheitselements ausgerichtet sein.

Dementsprechend können die in den vorherigen Figuren dargestellten Magnetisierungseinrichtungen z.B. auch um die x-Achse gedreht werden.

Anstatt der Permanentmagnete der Magnetisierungseinrichtungen 21, 21', 21", 21‴, 22, 22', 22", 22‴ der zuvor beschriebenen Ausführungsformen können natürlich auch Elektromagnete, insbesondere Spulen, verwendet werden.

In allen zuvor beschriebenen Ausführungsbeispielen wurde das Sicherheitselement 11 entlang der Transportstrecke T an der Sensoreinrichtung 20, 20', 20", 20‴ vorbeibewegt (bzw. genauer genommen durch diese hindurch bewegt). Alternativ dazu kann natürlich auch die Sensoreinrichtung entsprechend bewegt werden. Ebenso kann das erfindungsgemäße Verfahren auch ohne jegliche Relativbewegung ausgeführt werden, indem die beiden Magnetfeldbereiche mit den entsprechenden ersten und zweiten Magnetfeldstärken an demselben Ort in der jeweiligen Magnetfeldrichtung zeitlich nacheinander bereitgestellt werden, z.B. mittels Elektromagneten, die nacheinander entsprechend aktiviert werden.

Auch kann ein Sensor verwendet werden, der bereits einen (Permanent)-Magneten als funktionelles Bauteil des Sensors enthält. Dabei kann dieser Magnet gleichzeitig als funktioneller Bestandteil der Magnetisierungsvorrichtung, insbesondere der zweiten Magnetisierungsanordnung, genutzt werden. Dementsprechend enthält ein solcher Sensor die zweite Magnetisierungseinrichtung. Ein derartiger spezieller Sensor 100 ist in Figur 11 dargestellt. Der Sensor 100 umfasst insbesondere eine erste Spule 101 mit einem Weicheisenkern, eine zweite Spule 102 mit einem Weicheisenkern, einen Permanentmagneten 103 aus NdFeB und zwei Weicheisenelemente 104, die einen Rückschluss zwischen den Weicheisenkernen der Spulen 101, 102 und dem Magneten 103 erzeugen.

Der Permanentmagnet kann ein Magnetfeld mit einer Magnetfeldstärke H von 400 kA/m bereitstellen. Auf Grund des Gesamtaufbaus liegt auf der Transportstrecke T allerdings nur ein Magnetfeld mit einer Maximalmagnetfeldstärke von ca. 100 kA/m bis 150 kA/m vor. Jede der beiden Spulen ist dabei dazu geeignet, die durch die Magnetisierung des Sicherheitselements erzeugte magnetische Flussdichte zu messen und zwar im Idealfall mittig zwischen den Spulen. Zum Ausfiltern von Störungen kann alternativ oder zusätzlich zu den Einzelsignalen der beiden Spulen 101, 102 auch ein daraus gebildetes Differenzsignal ausgewertet werden. Dementsprechend ist der dargestellte Sensor 100 zwar im Aufbau relativ komplex, dafür aber auch besonders zuverlässig.

Bei den zuvor beschriebenen Ausführungsformen weisen beide Magnetmaterialien eine Koerzitivfeldstärke auf, die signifikant größer als Null ist. Anstatt des niederkoerzitiven Magnetmaterials mit der beispielhaft genannten Koerzivität kann alterativ auch ein weichmagnetisches Magnetmaterial mit einer Koerzitivfeldstärke von Null oder nahe Null verwendet werden. Die Magnetisierung dieses Magnetmaterials wird - im Gegensatz zu dem höher koerzitiven ersten Magnetmaterial - in dem zweiten Magnetfeld in die zweite Magnetfeldrichtung ausgerichtet und ist dadurch detektierbar. Derartige weichmagnetische Materialien werden in magnetischen Tinten eingesetzt, mit denen Sicherheitsmerkmale gedruckt werden können. Somit können entsprechende mit derartigen Tinten gedruckte Bereiche eines Sicherheitselements mit der vorliegenden Erfindung lokalisiert werden.

Unterschiedliche weichmagnetische Materialien mit unterschiedlichen Permeabilitäten können dabei an Hand der Stärke der jeweiligen Magnetsignale unterschieden werden.

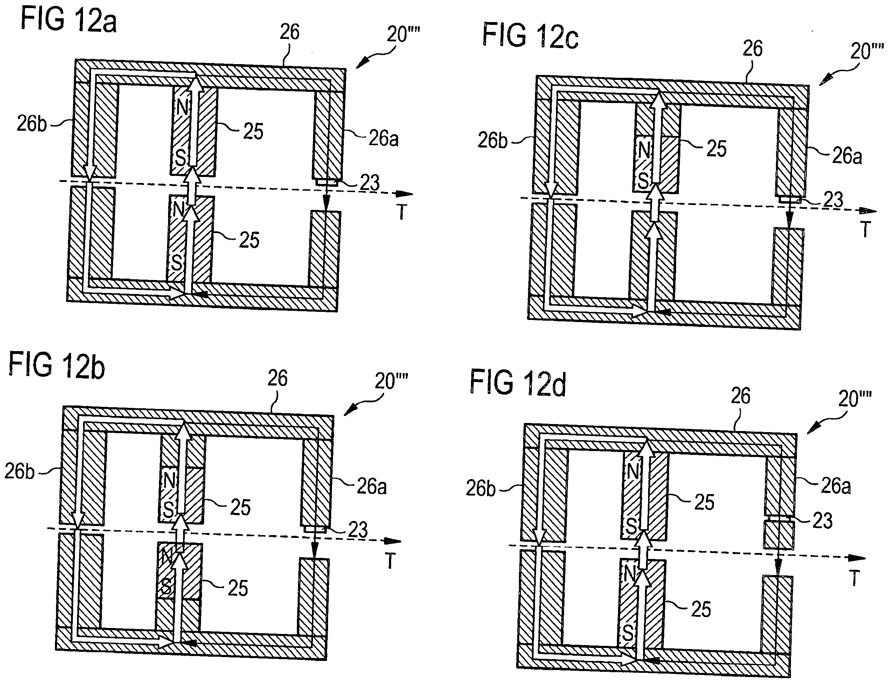

In den Figuren 12a, 12b, 12c, 12d, 12e, 13, 14a, 14b, 15 und 16 sind Sensoreinrichtungen 20"", 20""' dargestellt, bei denen die beiden Magnetfeldbereiche mittels nur einem einzelnen Permanentmagneten 25 oder zwei auf gegenüberliegenden Seiten der Transportstrecke T angeordneten Permanentmagneten 25 und 27 erzeugt werden. Bei der als Schnitt dargestellten Sensoreinrichtung 20"" in Figur 12a sind zwei Permanentmagnete 25 derart angeordnet, dass sich deren ungleichnamige Pole gegenüberstehen. Zwischen diesen Polen liegt der erste Magnetfeldbereich mit der vergleichsweise starken ersten Magnetfeldstärke. Die beiden Magneten sind zudem mit einer Anordnung 26 aus magnetisch leitendem Material verbunden, die die Magnetfeldlinien des durch die beiden Magneten 25 erzeugten Gesamtmagnetfelds "führt". Bei dem magnetisch leitfähigen Material kann es sich z.B. um ein ferromagnetisches Material handeln, besonders bevorzugt um ein weichmagnetisches Material, wie z.B. ein (preisgünstiges) Transformatorenblech. Ein Hauptteil der Magnetfeldlinien wird durch einen den Magneten 25 entlang der Transportstrecke T vorgeordneten zweiten Abschnitt 26b der Anordnung 26, der bei dem Transportpfad eine kleine Unterbrechung aufweist, geführt, und ein kleinerer Teil wird durch einen entlang der Transportstrecke T gesehen den Magneten nachgeordneten ersten Abschnitt 26a der Anordnung 26 geführt. Der zuvor genannte nachgeordnete Abschnitt 26a weist ebenfalls im Bereich der Transportstrecke T eine Unterbrechung auf. Da diese jedoch deutlich größer ist, als die des zweiten Abschnitts 26b, wird durch sie ein im Vergleich zu dem vorgeordneten Abschnitt geringer Teil der Magnetfeldlinien geleitet. Durch Variation der Größe dieser Aussparung kann also die zweite Magnetfeldstärke variiert werden. Dabei wird, sofern zum geeigneten Einstellen der zweiten Magnetfeldstärke eine relativ große Aussparung erforderlich ist, die Aussparung vorzugsweise im Wesentlichen unterhalb der Transportstrecke erzeugt, damit der Abstand des Sensors 23 zu dem vorbeitransportierten Wertdokument 10 nicht zu groß wird. Mit dem ersten Abschnitt 26a wird im Bereich von dessen Aussparung der zweite Magnetfeldbereich bereitgestellt. Dementsprechend ist auch der Sensor 23 innerhalb dieser Aussparung angeordnet, so dass er von dem zweiten Magnetfeldbereich ausgehende Magnetsignale erfasst. Die Magnetisierungsvorrichtung der Sensoreinrichtung 20ʺʺ in Figur 12a besteht also aus lediglich zwei Permanentmagneten 25 und der Anordnung 26 aus magnetisch leitendem Material.

Die in Figur 12b gezeigte Sensoreinrichtung 20"" ist zu der in Figur 12a dargestellten im Wesentlichen identisch. Sie unterscheidet sich jedoch darin, dass die beiden Magnete 25 etwas kleiner sind, wobei die Anordnung aus magnetisch leitendem Material geeignet geformt ist, um die Feldlinien der Magnete 25 dennoch geeignet zu führen.

Die in Figur 12c gezeigte Sensoreinrichtung ist identisch zu der in Figur 12b aufgebaut, mit dem einzigen Unterschied, dass sie nur einen Permanentmagneten 25 besitzt, der alleine stark genug ist, um den ersten Magnetfeldbereich bereitzustellen. Der zweite Magnetfeldbereich wird wie bei den Figuren 12a und 12b durch geeignete Führung der Magnetfeldlinien via der Anordnung 26 aus magnetisch leitendem Material bereitgestellt.

Die Sensoreinrichtung in Figur 12d ist identisch zu der in Figur 12a aufgebaut, mit dem einzigen Unterschied, dass der Sensor nicht direkt über dem zweiten Magnetfeldbereich angeordnet ist, sondern in den ersten Abschnitt 26a der Anordnung 26 integriert ist. Da die Anordnung 26a aus magnetisch leitendem Material besteht, werden durch das Sicherheitselement hervorgerufene Magnetfeldänderungen dennoch an den Sensor 23 weitergeleitet, der dementsprechend Magnetsignale erfassen kann, die von in dem zweiten Magnetfeldbereich angeordneten Sicherheitselementen ausgehen. Es hat sich herausgestellt, dass durch Integration des Sensors 23 in den Magnetpfad, wie in Figur 12d dargestellt, Interferenzen (Störsignale) stark reduziert werden, die andernfalls das erfasste Magnetsignal überlagern. Dies funktioniert besonders gut, wenn die Magnetfeldstärke des zweiten Magnetfeldbereichs deutlich kleiner ist, als die des ersten Magnetfeldbereichs, z.B. lediglich ein Hundertstel davon beträgt. Es hat sich überdies herausgestellt, dass derart starke Unterschiede der beiden Magnetfeldstärken insbesondere dann zweckmäßig sind, wenn das erste Magnetmaterial ein weichmagnetisches Magnetmaterial ist.

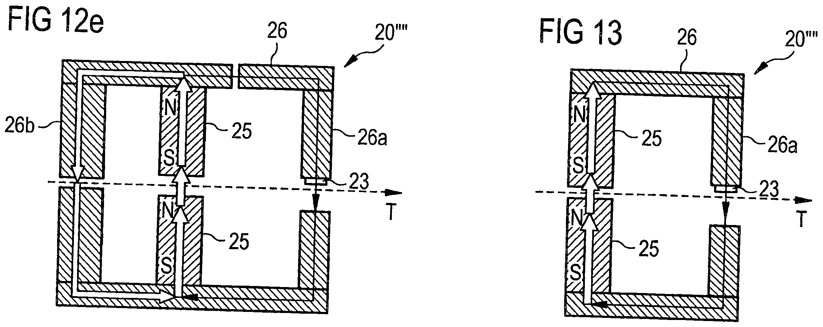

Die Sensoreinrichtung in Figur 12e ist ebenfalls grundsätzlich identisch zu der in Figur 12a aufgebaut, mit dem einzigen Unterschied, dass der erste Abschnitt 26a der Anordnung aus magnetisch leitendem Material im oberen Bereich eine weitere Aussparung bzw. Unterbrechung aufweist. Durch diese weitere Aussparung wird die zweite Magnetfeldstärke zusätzlich reduziert.

Die Figur 13 zeigt eine Abwandlung der Sensoreinrichtung 20"" aus Figur 12a. Die Sensoreinrichtung 20ʺʺ der Figur 13 unterscheidet sich dadurch, dass der zweite Abschnitt 26b der Anordnung 26 aus magnetisch leitendem Material nicht vorhanden ist. Bei dieser Anordnung wird dementsprechend nur ein kleiner Teil der Magnetfeldlinien via der Anordnung 26 aus magnetisch leitfähigem Material geführt, nämlich der Teil, der zugleich den zweiten Magnetfeldbereich erzeugt. Der Großteil der Magnetfeldlinien, der in Figur 12a durch den zweiten Abschnitt 26b der Anordnung 26 aus magnetisch leitfähigem Material geführt wird, verläuft bei der in Figur 13 dargestellten vorliegenden Ausführungsform durch das Umfeld, z.B. durch die Luft. Dementsprechend kann bei der vorliegenden Ausführungsform das Material für den zweiten Abschnitt 26b eingespart werden. Dafür können unter Umständen - je nach spezifischer Ausgestaltung - etwas stärkere Magnete 25 erforderlich sein. Insgesamt kann also bei den Ausführungsformen der Figuren 12a bis 12d der zweite Abschnitt 26b auch weggelassen werden.

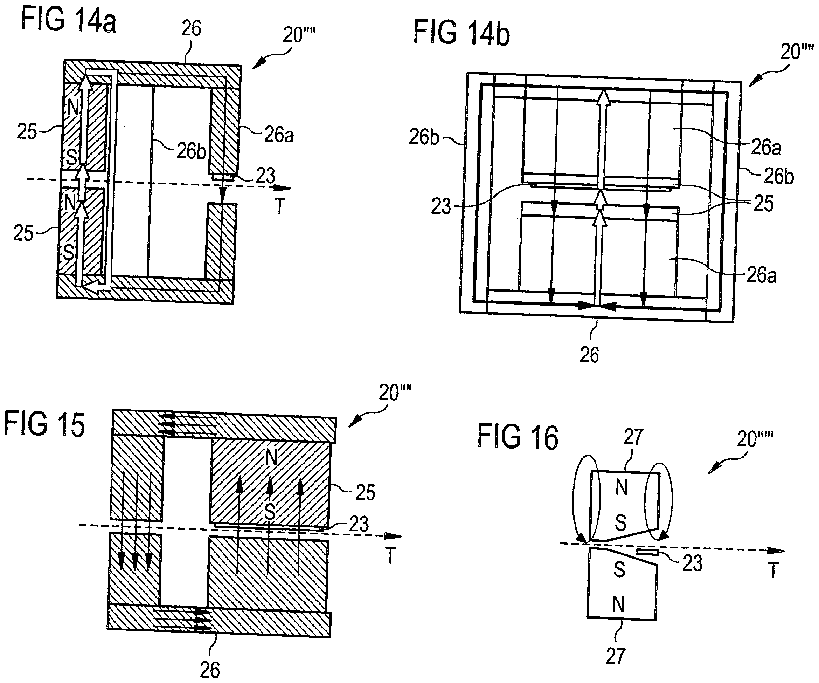

In den Figuren 14a und 14b ist eine weitere Abwandlung der Sensoreinrichtung 20"" aus Figur 12a im Schnitt von der Seite (Figur 14a) und als Vorderansicht (Figur 14b), d.h. entlang des Transportpfades T gesehen aus der der Transportrichtung entgegengesetzten Richtung betrachtet, dargestellt. Die Sensoreinrichtung 20ʺʺ der Figuren 14a und 14b unterscheidet sich dadurch, dass der zweite Abschnitt 26b der Anordnung 26 aus magnetisch leitendem Material die Magnetfeldlinien nicht (vor dem ersten Magnetfeldbereich) durch den Transportpfad T hindurch leitet, sondern seitlich an dem Transportpfad T vorbeiführt. Dadurch wird die Sensoreinrichtung 20ʺʺ in Transportrichtung kompakter, und der magnetische Gesamtwiderstand der durch den zweiten Abschnitt 26b und die Magnete 25 gebildeten Flussführung ist besonders klein, auch wenn vergleichsweise wenig magnetisch leitendes Material verwendet wird (z.B. wenn die seitliche Flussführung aus relativ dünnem Blech besteht).

Auch die in Figur 15 dargestellte Sensoreinrichtung 20"" erzeugt die beiden Magnetfeldbereiche mittels eines Permanentmagneten 25 und einer Anordnung 26 aus magnetisch leitendem Material. Sie ist jedoch grundlegend anders als die Sensoreinrichtungen der Figuren 12a, 12b, 12c, 12d, 12e, 13, 14a und 14b aufgebaut. Bei der Sensoreinrichtung 20"" gemäß Figur 15 wird direkt bei dem Permanentmagneten 25 der zweite Magnetfeldbereich erzeugt, in dessen Nähe der Sensor 23 angeordnet ist, und via der Anordnung 26 aus magnetisch leitendem Material wird der erste Magnetfeldbereich erzeugt. In dem ersten Magnetfeldbereich herrscht dennoch eine größere Magnetfeldstärke als in dem zweiten Magnetfeldbereich, da die Anordnung 26 aus magnetisch leitendem Material die Magnetfeldlinien bei dem ersten Magnetfeldbereich in einen kleineren Bereich bündelt als bei dem zweiten Magnetfeldbereich.

Die Merkmale der in den Figuren 12a, 12b, 12c, 12d, 12e, 13, 14a, 14b und 15 dargestellten Ausführungsformen können natürlich auch geeignet miteinander kombiniert werden. Beispielsweise können bei der in Figur 15 dargestellten Sensoreinrichtung 20ʺʺ auch zwei beidseitig der Transportstrecke T angeordnete Permanentmagnete vorhanden sein, d.h. z.B. ein zusätzlicher Magnet auf der dem Magneten 25 gegenüberliegenden Seite der Transportstrecke T.

Die Magnetisierungsvorrichtung der Sensoreinrichtung 20ʺʺ in Figur 16 umfasst lediglich zwei geeignet geformte Permanentmagnete 27. Da der Spalt zwischen diesen in dem entlang der Transportstrecke T gesehen vorderen Bereich der Magnetisierungsvorrichtung kleiner ist als in dem hinteren Bereich, ist die Magnetfeldstärke des in dem entsprechenden vorderen ersten Magnetfeldbereich in Transportrichtung T ausgerichteten Magnetfelds größer als die Magnetfeldstärke des in dem entsprechenden hinteren zweiten Magnetfeldbereich entgegen der Transportrichtung T ausgerichteten Magnetfelds.

Die Permanentmagnete 25, 27 können auch aus mehreren Einzelkörpern zusammengesetzt sein. Anstatt der Permanentmagnete 25, 27 können überdies auch entsprechende Elektromagnete verwendet werden.

## Patentansprüche

1. Verfahren zum Prüfen eines Sicherheitselements (11), das mindestens ein erstes Magnetmaterial mit einer ersten Koerzitivfeldstärke und ein zweites Magnetmaterial mit einer zweiten Koerzitivfeldstärke, die kleiner ist als die erste Koerzitivfeldstärke, aufweist, wobei das Sicherheitselement (11) zumindest einen ersten Magnetbereich (h), der das erste und nicht das zweite Magnetmaterial aufweist, zumindest einen zweiten Magnetbereich (l), der das zweite und nicht das erste Magnetmaterial aufweist, sowie keinen oder zumindest einen dritten Magnetbereich (k), der sowohl das erste als auch das zweite Magnetmaterial aufweist, umfasst, umfassend die folgenden Schritte:
- Aussetzen (S1) des Sicherheitselements (11) einem ersten Magnetfeldbereich mit einer ersten Magnetfeldrichtung und einer ersten Magnetfeldstärke, die größer ist als die erste und die zweite Koerzitivfeldstärke, derart dass sowohl das erste Magnetmaterial als auch das zweite Magnetmaterial in eine erste Magnetisierungsrichtung vormagnetisiert werden,
- Aussetzen (S2) des Sicherheitselements (11) einem zweiten Magnetfeldbereich, mit einer zweiten Magnetfeldrichtung, die im Wesentlichen entgegengesetzt zu der ersten Magnetfeldrichtung verläuft, und einer zweiten Magnetfeldstärke, die größer ist als die zweite Koerzitivfeldstärke und kleiner ist als die erste Koerzitivfeldstärke, derart dass das zweite Magnetmaterial durch den zweiten Magnetfeldbereich in eine zweite Magnetisierungsrichtung ausgerichtet wird, die sich von der ersten Magnetisierungsrichtung unterscheidet, während das erste Magnetmaterial in die erste Magnetisierungsrichtung vormagnetisiert bleibt,
- Erfassen (S3) eines Magnetsignals von zumindest einem der Magnetbereiche (h, k, l) des Sicherheitselements (11), während das Sicherheitselement (11) dem zweiten Magnetfeldbereichs ausgesetzt ist, und
- Auswerten (S4) des Magnetsignals,
**dadurch gekennzeichnet, dass** beim Schritt des Auswertens (S4) aus dem erfassten Magnetsignal, das von zumindest einem der Magnetbereiche des Sicherheitselements erfasst wird, ohne dass dazu weitere Magnetsignale der Magnetbereiche (h, k, l) erfasst und ausgewertet werden, abgeleitet wird, ob der betreffende Magnetbereich (h, k, l) ein erster Magnetbereich (h) oder ein zweiter Magnetbereich (l) ist, und bei dem aus dem erfassten Magnetsignal, ohne dass dazu weitere Magnetsignale der Magnetbereiche (h, k, l) erfasst und ausgewertet werden, auch abgeleitet wird, ob der betreffende Magnetbereich (h, k, l) ein dritter Magnetbereich (k) ist, bei dem sich die Magnetsignale des ersten und zweiten Magnetmaterials in ihrem Absolutbetrag deutlich unterscheiden, so dass sie sich bei ihrer Überlagerung nicht auslöschen.

2. Verfahren nach Anspruch 1, **dadurch gekennzeichnet, dass** der zweite Magnetfeldbereich in einem Kernbereich eines von einer Magnetisierungsvorrichtung (21, 22; 21', 22'; 21", 22", 21‴, 22‴; 25, 26; 27) erzeugten Magnetfelds liegt, wobei vorzugsweise in dem zweiten Magnetfeldbereich eine Magnetfeldstärke vorliegt, die mindestens 25 %, bevorzugt mindestens 50 % und besonders bevorzugt mindestens 75 % einer lokalen Maximalmagnetfeldstärke des von der Magnetisierungsvorrichtung (21, 22; 21', 22'; 21", 22", 21‴, 22‴; 25, 26; 27) erzeugten Magnetfelds beträgt.

3. Verfahren nach einem der vorhergehenden Ansprüche, **dadurch gekennzeichnet, dass** das Sicherheitselement (11) dem zweiten Magnetfeldbereich ausgesetzt wird (S3), wenn das erste Magnetmaterial und zweite Magnetmaterial noch in eine erste Magnetisierungsrichtung vormagnetisiert sind.

4. Verfahren nach Anspruch 3, **dadurch gekennzeichnet, dass** beim Schritt (S4) des Auswertens des Magnetsignals eine Position des betreffenden Magnetbereichs (h, k, l) ermittelt wird.

5. Verfahren nach einem der vorhergehenden Ansprüche, **dadurch gekennzeichnet, dass** beim Schritt des Erfassens des Magnetsignals (S3) eine durch die Magnetisierung des Sicherheitselements (11) erzeugte Magnetflussdichte in einer Richtung erfasst wird, die im Wesentlichen senkrecht zu der Magnetfeldrichtung des zweiten Magnetfeldbereichs verläuft.

6. Verfahren nach einem der Ansprüche 1 bis 4, **dadurch gekennzeichnet, dass** beim Schritt des Erfassens des Magnetsignals (S3) eine durch die Magnetisierung des Sicherheitselements (11) erzeugte Magnetflussdichte in einer Richtung erfasst wird, die im Wesentlichen parallel oder antiparallel zu der Magnetfeldrichtung des zweiten Magnetfeldbereichs verläuft.

7. Verfahren nach einem der vorhergehenden Ansprüche, **dadurch gekennzeichnet, dass** das Sicherheitselement (11) dem zweiten Magnetfeldbereich der zweiten Magnetfeldstärke derart ausgesetzt wird (S2), dass die Magnetfeldrichtung des zweiten Magnetfeldbereichs im Wesentlichen senkrecht oder im Wesentlichen parallel zu einer Hauptebene des Sicherheitselements (11) verläuft.

8. Verfahren nach einem der vorhergehenden Ansprüche, **dadurch gekennzeichnet, dass** ein Sicherheitselement (11) eines Wertdokuments (10) oder Sicherheitsartikels geprüft wird.

9. Prüfvorrichtung (1, 1', 1", 1‴) zum Prüfen eines Sicherheitselements (11), das z.B. Bestandteil eines Wertdokuments (10) oder eines Sicherheitsartikels sein kann und das mindestens ein erstes Magnetmaterial mit einer ersten Koerzitivfeldstärke und ein zweites Magnetmaterial mit einer zweiten Koerzitivfeldstärke, die kleiner ist als die erste Koerzitivfeldstärke, aufweist, wobei das Sicherheitselement (11) zumindest einen ersten Magnetbereich (h), der das erste und nicht das zweite Magnetmaterial aufweist, zumindest einen zweiten Magnetbereich (l), der das zweite und nicht das erste Magnetmaterial aufweist, sowie keinen oder zumindest einen dritten Magnetbereich (k), der sowohl das erste als auch das zweite Magnetmaterial aufweist, umfasst, umfassend:
- eine Transportstrecke, entlang der das Sicherheitselement (11) in einer Transportrichtung bewegbar ist,
- eine Magnetisierungsvorrichtung (21, 22; 21', 22'; 21", 22", 21‴, 22‴; 25, 26; 27), die eingerichtet ist,
einen ersten Magnetfeldbereich mit einer ersten Magnetfeldrichtung und einer ersten Magnetfeldstärke in einem Bereich der Transportstrecke (T) derart bereitzustellen, dass in dem ersten Magnetfeldbereich befindliches Magnetmaterial eines zu prüfenden Sicherheitselements (11) in eine erste Magnetisierungsrichtung magnetisierbar ist, und
einen entlang der Transportstrecke (T) dem ersten Magnetfeldbereich nachgeordneten zweiten Magnetfeldbereich mit einer zweiten Magnetfeldrichtung, die im Wesentlichen entgegengesetzt zu der ersten Magnetfeldrichtung verläuft, und einer zweiten Magnetfeldstärke, die kleiner ist als die erste Magnetfeldstärke, derart bereitzustellen, dass in dem zweiten Magnetfeldbereich befindliches Magnetmaterial eines zu prüfenden Sicherheitselements in eine zweite, sich von der ersten Magnetisierungsrichtung unterscheidenden Magnetisierungsrichtung magnetisierbar ist,
- einen Sensor (23) zum Erfassen eines Magnetsignals von zumindest einem der Magnetbereiche (h, k, l) des zu prüfenden Sicherheitselements (11), der eingerichtet ist, Magnetsignale zu erfassen, die von dem zweiten Magnetfeldbereich ausgehen, um das Magnetsignal zu erfassen, während das Sicherheitselement der zweiten Magnetfeldstärke des zweiten Magnetfeldbereichs ausgesetzt ist, und
- eine Auswerteeinrichtung (30),
**dadurch gekennzeichnet, dass** die Auswerteeinrichtung (30) eingerichtet ist, aus dem erfassten Magnetsignal, das von zumindest einem der Magnetbereiche des Sicherheitselements erfasst wird, ohne dazu weitere Magnetsignale der Magnetbereiche (h, k, l) auszuwerten, abzuleiten, ob der betreffende Magnetbereich (h, k, l) ein erster Magnetbereich (h) oder ein zweiter Magnetbereich (l) ist, und auch dazu eingerichtet ist, aus dem erfassten Magnetmaterial, ohne dazu weitere Magnetsignale der Magnetbereiche (h, k, l) auszuwerten, abzuleiten, ob der betreffende Magnetbereich ein dritter Magnetbereich (k) ist, bei dem sich die Magnetsignale des ersten und zweiten Magnetmaterials in ihrem Absolutbetrag deutlich unterscheiden, so dass sie sich bei ihrer Überlagerung nicht auslöschen.

10. Prüfvorrichtung (1, 1', 1", 1‴) nach Anspruch 9, **dadurch gekennzeichnet, dass** der zweite Magnetfeldbereich in einem Kernbereich eines von der Magnetisierungsvorrichtung (21, 22; 21', 22'; 21", 22", 21‴, 22‴; 25, 26; 27) erzeugten Gesamtmagnetfelds liegt, wobei vorzugsweise in dem zweiten Magnetfeldbereich eine Magnetfeldstärke vorliegt, die mindestens 25 %, bevorzugt mindestens 50 % und besonders bevorzugt mindestens 75 % einer lokalen Maximalmagnetfeldstärke des von der Magnetisierungsvorrichtung (21, 22; 21', 22'; 21", 22", 21‴, 22‴; 25, 26; 27) erzeugten Magnetfelds beträgt.

11. Prüfvorrichtung nach Anspruch 9 oder 10, **dadurch gekennzeichnet, dass** die Magnetisierungsvorrichtung (25, 26; 27) einen auf einer Seite der Transportstrecke angeordneten Permanent- oder Elektromagneten umfasst, der sowohl den ersten als auch den zweiten Magnetfeldbereich erzeugt oder zumindest überwiegend erzeugt, oder zwei auf gegenüberliegenden Seiten der Transportstrecke (T) angeordnete Permanent- oder Elektromagneten umfasst, die zusammenwirkend sowohl den ersten als auch den zweiten Magnetfeldbereich erzeugen oder zumindest überwiegend erzeugen.

12. Prüfvorrichtung (1, 1', 1", 1‴) nach einem der Ansprüche 9 bis 11, **dadurch gekennzeichnet, dass** die Prüfvorrichtung (1, 1', 1", 1‴) eingerichtet ist, ein Verfahren nach einem der Ansprüche 1 bis 8 auszuführen.

13. Sensoreinrichtung (20ʺʺ, 20‴ʺ) zum Prüfen eines Sicherheitselements (11), das mehrere Magnetbereiche (h, k, l) mit Magnetmaterialien unterschiedlicher Koerzitivfeldstärke aufweist, umfassend:
- eine Magnetisierungsvorrichtung (25, 26; 27) die eingerichtet ist,
einen ersten Magnetfeldbereich mit einer ersten Magnetfeldrichtung und einer ersten Magnetfeldstärke in einem ersten Bereich einer Transportstrecke (T) für das zu prüfende Sicherheitselement (11) derart bereitzustellen, dass in dem ersten Magnetfeldbereich befindliches Magnetmaterial eines zu prüfenden Sicherheitselements (11) in eine erste Magnetisierungsrichtung magnetisierbar ist, und
einen dem ersten Magnetfeldbereich nachgeordneten zweiten Magnetfeldbereich in einem zweiten Bereich der Transportstrecke (T) mit einer zweiten Magnetfeldrichtung, die von der ersten Magnetfeldrichtung verschieden ist, und einer zweiten Magnetfeldstärke, die kleiner ist als die erste Magnetfeldstärke, derart bereitzustellen, dass in dem zweiten Bereich befindliches Magnetmaterial des zu prüfenden Sicherheitselements (11) in eine zweite, sich von der ersten Magnetisierungsrichtung unterscheidenden Magnetisierungsrichtung magnetisierbar ist, und
- einen Sensor (23) zum Erfassen eines Magnetsignals von zumindest einem der Magnetbereiche (h, k, l) des zu prüfenden Sicherheitselements (11), der eingerichtet ist, Magnetsignale zu erfassen, die von dem zweiten Magnetfeldbereich ausgehen, um das Magnetsignal zu erfassen, während das Sicherheitselement der zweiten Magnetfeldstärke des zweiten Magnetfeldbereichs ausgesetzt ist,
**dadurch gekennzeichnet, dass** die Magnetisierungsvorrichtung (25, 26; 27) einen auf einer Seite der Transportstrecke (T) angeordnete Permanent- oder Elektromagneten (25) umfasst, der sowohl den ersten als auch den zweiten Magnetfeldbereich erzeugt oder zumindest überwiegend erzeugt, oder zwei auf gegenüberliegenden Seiten der Transportstrecke (T) angeordnete Permanent- oder Elektromagneten (25, 27) umfasst, die zusammenwirkend sowohl den ersten als auch den zweiten Magnetfeldbereich erzeugen oder zumindest überwiegend erzeugen, wobei der eine oder die zwei einander gegenüberliegenden Magnete mit einer Anordnung aus magnetisch leitfähigem Material verbunden sind, die das Magnetfeld von dem einen bzw. von den zwei einander gegenüberliegenden Magneten zu dem ersten und zu dem zweiten Magnetfeldbereich führt.

## Claims

1. A method for checking a security element (11) which has at least a first magnetic material having a first coercive field strength and a second magnetic material having a second coercive field strength which is smaller than the first coercive field strength, wherein the security element (11) comprises at least a first magnetic region (h) which has the first and not the second magnetic material, at least a second magnetic region (1) which has the second and not the first magnetic material, and no or at least a third magnetic region (k) which has the first as well as the second magnetic material, comprising the following steps of:
- subjecting (S1) the security element (11) to a first magnetic field region having a first magnetic field direction and a first magnetic field strength which is greater than the first and the second coercive field strength, such that both the first magnetic material and the second magnetic material are premagnetized in a first magnetization direction,
- subjecting (S2) the security element (11) to a second magnetic field region having a second magnetic field direction which extends substantially contrary to the first magnetic field direction, and a second magnetic field strength which is greater than the second coercive field strength and is smaller than the first coercive field strength, such that the second magnetic material is aligned by the second magnetic field region in a second magnetization direction which differs from the first magnetization direction, while the first magnetic material remains premagnetized in the first magnetization direction,
- capturing (S3) a magnetic signal from at least one of the magnetic regions (h, k, 1) of the security element (11) while the security element (11) is subjected to the second magnetic field region, and
- evaluating (S4) the magnetic signal,
**characterized in that** in the evaluating step (S4) it is derived from the captured magnetic signal, which is captured from at least one of the magnetic regions of the security element, without any further magnetic signals of the magnetic regions (h, k, 1) being captured and evaluated, whether the relevant magnetic region (h, k, 1) is a first magnetic region (h) or a second magnetic region (1), and wherein it is also derived from the captured magnetic signal, without any further magnetic signals of the magnetic regions (h, k, 1) being captured and evaluated, whether the relevant magnetic region (h, k, 1) is a third magnetic region (k), in which the magnetic signals of the first and the second magnetic material clearly differ in their absolute value, so that they do not cancel each other out when superimposed.

2. The method according to claim 1, **characterized in that** the second magnetic field region lies in a core region of a magnetic field generated by a magnetization apparatus (21, 22; 21', 22'; 21", 22", 21‴, 22‴; 25, 26; 27), wherein there is preferably present in the second magnetic field region a magnetic field strength that amounts to at least 25%, preferably at least 50%, and particularly preferably at least 75%, of a local maximum magnetic field strength of the magnetic field generated by the magnetization apparatus (21, 22; 21', 22'; 21", 22", 21‴, 22‴; 25, 26; 27).

3. The method according to either of the preceding claims, **characterized in that** the security element (11) is subjected (S3) to the second magnetic field region when the first magnetic material and second magnetic material are still premagnetized in a first magnetization direction.

4. The method according to claim 3, **characterized in that** in the step (S4) of evaluating the magnetic signal a position of the relevant magnetic region (h, k, 1) is ascertained.

5. The method according to any of the preceding claims, **characterized in that** in the step of capturing the magnetic signal (S3) a magnetic flux density generated by the magnetization of the security element (11) is captured in a direction extending substantially perpendicularly to the magnetic field direction of the second magnetic field region.

6. The method according to any of claims 1 to 4, **characterized in that** in the step of capturing the magnetic signal (S3) a magnetic flux density generated by the magnetization of the security element (11) is captured in a direction extending substantially parallel or anti-parallel to the magnetic field direction of the second magnetic field region.

7. The method according to any of the preceding claims, **characterized in that** the security element (11) is subjected (S2) to the second magnetic field region of the second magnetic field strength such that the magnetic field direction of the second magnetic field region extends substantially perpendicularly or substantially parallel to a principal plane of the security element (11).

8. The method according to any of the preceding claims, **characterized in that** a security element (11) of a value document (10) or security article is checked.

9. A checking apparatus (1, 1', 1", 1‴) for checking a security element (11) which can be e.g. part of a value document (10) or of a security article and which has at least a first magnetic material having a first coercive field strength and a second magnetic material having a second coercive field strength which is smaller than the first coercive field strength, wherein the security element (11) comprises at least a first magnetic region (h) which has the first and not the second magnetic material, at least a second magnetic region (1) which has the second and not the first magnetic material, and no or at least a third magnetic region (k) which has the first as well as the second magnetic material, comprising:
- a transport line along which the security element (11) is movable in a transport direction,
- a magnetization apparatus (21, 22; 21', 22'; 21", 22", 21‴, 22‴; 25, 26; 27) which is adapted
to supply a first magnetic field region having a first magnetic field direction and a first magnetic field strength in a region of the transport line (T) such that magnetic material, located in the first magnetic field region, of a security element (11) to be checked is magnetizable in a first magnetization direction, and
to supply a second magnetic field region downstream of the first magnetic field region along the transport line (T) and having a second magnetic field direction which extends substantially contrary to the first magnetic field direction, and a second magnetic field strength which is smaller than the first magnetic field strength, such that magnetic material, located in the second magnetic field region, of a security element to be checked is magnetizable in a second magnetization direction differing from the first magnetization direction,
- a sensor (23) for capturing a magnetic signal from at least one of the magnetic regions (h, k, 1) of the security element (11) to be checked, which sensor is adapted to capture magnetic signals emanating from the second magnetic field region, in order to capture the magnetic signal while the security element is subjected to the second magnetic field strength of the second magnetic field region, and
- an evaluation device (30),
**characterized in that** the evaluation device (30) is adapted to derive from the captured magnetic signal, without evaluating any further magnetic signals of the magnetic regions (h, k, 1), whether the relevant magnetic region (h, k, 1) is a first magnetic region (h) or a second magnetic region (1), and is also adapted to derive from the captured magnetic material, without evaluating any further magnetic signals of the magnetic regions (h, k, 1), whether the relevant magnetic region is a third magnetic region (k) in which the magnetic signals of the first and the second magnetic material clearly differ in their absolute value, so that they do not cancel each other out when superimposed.

10. The checking apparatus (1, 1', 1", 1‴) according to claim 9, **characterized in that** the second magnetic field region lies in a core region of a magnetic field generated by a magnetization apparatus (21, 22; 21', 22'; 21", 22", 21‴, 22‴; 25, 26; 27), wherein there is preferably present in the second magnetic field region a magnetic field strength that amounts to at least 25%, preferably at least 50%, and particularly preferably at least 75%, of a local maximum magnetic field strength of the magnetic field generated by the magnetization apparatus (21, 22; 21', 22'; 21", 22", 21‴, 22‴; 25, 26; 27).

11. The checking apparatus according to claim 9 or 10, **characterized in that** the magnetization apparatus (25, 26; 27) comprises a permanent magnet or electromagnet arranged on one side of the transport line, which generates both the first and the second magnetic field region or at least predominantly generates them, or comprises two permanent magnets or electromagnets arranged on opposing sides of the transport line (T), which cooperatively generate both the first and the second magnetic field region or at least predominantly generate them.

12. The checking apparatus (1, 1', 1", 1‴) according to any of claims 9 to 11, **characterized in that** the checking apparatus (1, 1', 1", 1‴) is adapted to execute a method according to any of claims 1 to 8.

13. A sensor device (20ʺʺ, 20‴ʺ) for checking a security element (11) which has a plurality of magnetic regions (h, k, 1) having magnetic materials of different coercive field strength, comprising:
- a magnetization apparatus (25, 26; 27) which is adapted
to supply a first magnetic field region having a first magnetic field direction and a first magnetic field strength in a first region of a transport line (T) for the security element (11) to be checked, such that magnetic material, located in the first magnetic field region, of a security element (11) to be checked is magnetizable in a first magnetization direction, and
to supply a second magnetic field region, downstream of the first magnetic field region, in a second region of the transport line (T) having a second magnetic field direction which is different from the first magnetic field direction, and a second magnetic field strength which is smaller than the first magnetic field strength, such that magnetic material, located in the second region, of the security element (11) to be checked is magnetizable in a second magnetization direction differing from the first magnetization direction, and
- a sensor (23) for capturing a magnetic signal from at least one of the magnetic regions (h, k, 1) of the security element (11) to be checked, which sensor is adapted to capture magnetic signals emanating from the second magnetic field region, in order to capture the magnetic signal while the security element is subjected to the second magnetic field strength of the second magnetic field region,
**characterized in that** the magnetization apparatus (25, 26; 27) comprises a permanent magnet or electromagnet (25) arranged on one side of the transport line (T), which generates both the first and the second magnetic field region or at least predominantly generates them, or comprises two permanent magnets or electromagnets (25, 27) arranged on opposing sides of the transport line (T), which cooperatively generate both the first and the second magnetic field region or at least predominantly generate them, wherein the one or the two mutually facing magnets are connected to an arrangement of magnetically conductive material, said arrangement guiding the magnetic field from the one magnet or from the two mutually facing magnets to the first and to the second magnetic field region.

## Revendications

1. Procédé de vérification d'un élément de sécurité (11) comportant au moins un premier matériau magnétique ayant une première intensité de champ coercitif et un deuxième matériau magnétique ayant une deuxième intensité de champ coercitif inférieure à la première intensité de champ coercitif, cependant que l'élément de sécurité (11) comprend au moins une première zone magnétique (h) comportant le premier et pas le deuxième matériau magnétique, au moins une deuxième zone magnétique (1) comportant le deuxième et pas le premier matériau magnétique, ainsi qu'aucune ou au moins une troisième zone magnétique (k) comportant tant le premier que le deuxième matériau magnétique, comprenant les étapes suivantes :
- exposition (S1) de l'élément de sécurité (11) à une première zone de champ magnétique avec une première direction de champ magnétique et une première intensité de champ magnétique supérieure à la première et à la deuxième intensité de champ coercitif, de telle façon que tant le premier matériau magnétique que le deuxième matériau magnétique sont pré-magnétisés dans une première direction de magnétisation,
- exposition (S2) de l'élément de sécurité (11) à une deuxième zone de champ magnétique avec une deuxième direction de champ magnétique essentiellement opposée à la première direction de champ magnétique, et avec une deuxième intensité de champ magnétique supérieure à la deuxième intensité de champ coercitif et inférieure à la première intensité de champ coercitif, de telle façon que le deuxième matériau magnétique est aligné par la deuxième zone de champ magnétique dans une deuxième direction de magnétisation qui se différencie de la première direction de magnétisation, tandis que le premier matériau magnétique reste pré-magnétisé dans la première direction de magnétisation,
- saisie (S3) d'un signal magnétique d'au moins une des zones magnétiques (h, k, l) de l'élément de sécurité (11) pendant que l'élément de sécurité (11) est exposé à la deuxième zone de champ magnétique, et
- évaluation (S4) du signal magnétique,
**caractérisé en ce que,** lors de l'étape de l'évaluation (S4), à partir du signal magnétique saisi qui est saisi d'au moins une des zones magnétiques de l'élément de sécurité, sans que pour cela d'autres signaux magnétiques des zones magnétiques (h, k, l) soient saisis et évalués, il est déduit si la zone magnétique concernée (h, k, 1) est une première zone magnétique (h) ou une deuxième zone magnétique (1), et dans lequel, à partir du signal magnétique saisi, sans que pour cela d'autres signaux magnétiques des zones magnétiques (h, k, l) soient saisis et évalués, il est déduit aussi si la zone magnétique concernée (h, k, 1) est une troisième zone magnétique (k) dans laquelle les signaux magnétiques du premier et du deuxième matériau magnétique se différencient nettement en leur valeur absolue, de telle sorte qu'ils ne s'annulent pas lors de leur superposition.

2. Procédé selon la revendication 1, **caractérisé en ce que** la deuxième zone de champ magnétique se situe dans une zone principale d'un champ magnétique généré par un dispositif de magnétisation (21, 22; 21', 22'; 21", 22"; 21‴, 22‴; 25, 26; 27), cependant qu'il y a de préférence dans la deuxième zone de champ magnétique une intensité de champ magnétique qui s'élève à au moins 25%, de préférence à au moins 50% et particulièrement de préférence à au moins 75 % d'un intensité maximale locale de champ magnétique du champ magnétique généré par le dispositif de magnétisation (21, 22; 21', 22'; 21", 22"; 21‴, 22‴; 25, 26; 27).

3. Procédé selon une des revendications précédentes, **caractérisé en ce que** l'élément de sécurité (11) est exposé (S3) à la deuxième zone de champ magnétique quand le premier matériau magnétique et le deuxième matériau magnétique sont encore magnétisés dans une première direction de magnétisation.

4. Procédé selon la revendication 3, **caractérisé en ce que,** à l'étape (S4) de l'évaluation du signal magnétique, une position de la zone magnétique concernée (h, k, 1) est déterminée.

5. Procédé selon une des revendications précédentes, **caractérisé en ce que,** à l'étape de la saisie du signal magnétique (S3), une densité de flux magnétique générée par la magnétisation de l'élément de sécurité (11) est saisie dans une direction essentiellement perpendiculaire à la direction de champ magnétique de la deuxième zone de champ magnétique.

6. Procédé selon une des revendications de 1 à 4, **caractérisé en ce que,** à l'étape de la saisie du signal magnétique (S3), une densité de flux magnétique générée par la magnétisation de l'élément de sécurité (11) est saisie dans une direction essentiellement parallèle ou antiparallèle à la direction de champ magnétique de la deuxième zone de champ magnétique.

7. Procédé selon une des revendications précédentes, **caractérisé en ce que** l'élément de sécurité (11) est exposé (S2) de telle façon à la deuxième zone de champ magnétique de la deuxième intensité de champ magnétique que la direction de champ magnétique de la deuxième zone de champ magnétique est essentiellement perpendiculaire ou essentiellement parallèle à un plan principale de l'élément de sécurité (11).

8. Procédé selon une des revendications précédentes, **caractérisé en ce qu'**un élément de sécurité (11) d'un document de valeur (10) ou d'un article de sécurité est vérifié.

9. Dispositif de vérification (1, 1', 1", 1‴) destiné à la vérification d'un élément de sécurité (11) qui peut être par exemple partie intégrante d'un document de valeur (10) ou d'un article de sécurité et qui comporte au moins une premier matériau magnétique ayant une première intensité de champ coercitif et un deuxième matériau magnétique ayant une deuxième intensité de champ coercitif inférieure à la première intensité de champ coercitif, cependant que l'élément de sécurité (11) comprend au moins une première zone magnétique (h) comportant le premier et pas le deuxième matériau magnétique, au moins une deuxième zone magnétique (1) comportant le deuxième et pas le premier matériau magnétique, ainsi qu'aucune ou au moins une troisième zone magnétique (k) comportant tant le premier que le deuxième matériau magnétique, comprenant :
- une voie de transport le long de laquelle l'élément de sécurité (11) peut être déplacé dans une direction de transport,
- un dispositif de magnétisation (21, 22; 21', 22'; 21", 22"; 21‴, 22‴; 25, 26; 27) conçu pour
mettre de telle façon à disposition une première zone de champ magnétique avec une première direction de champ magnétique et une première intensité de champ magnétique dans une zone de la voie de transport (T) que du matériau magnétique, d'un élément de sécurité (11) à vérifier, se trouvant dans la première zone de champ magnétique, peut être magnétisé dans une première direction de magnétisation, et
mettre de telle façon à disposition une deuxième zone de champ magnétique, disposée en aval de la première zone de champ magnétique le long de la voie de transport (T), avec une deuxième direction de champ magnétique essentiellement opposée à la première direction de champ magnétique et avec une deuxième intensité de champ magnétique inférieure à la première intensité de champ magnétique que du matériau magnétique, d'un élément de sécurité à vérifier, se trouvant dans la deuxième zone de champ magnétique, peut être magnétisé dans une deuxième direction de magnétisation se différenciant de la première direction de magnétisation,
- un capteur (23) pour la saisie d'un signal magnétique d'au moins une des zones magnétiques (h, k, 1) de l'élément de sécurité (11) à vérifier, lequel est conçu pour saisir des signaux magnétiques qui émanent de la deuxième zone de champ magnétique afin de saisir le signal magnétique pendant que l'élément de sécurité est exposé à la deuxième intensité de champ magnétique de la deuxième zone de champ magnétique, et
- un équipement d'évaluation (30),
**caractérisé en ce que** l'équipement d'évaluation (30) est conçu pour, à partir du signal magnétique saisi qui est saisi d'au moins une des zones magnétiques de l'élément de sécurité, sans pour cela évaluer d'autres signaux magnétiques des zones magnétiques (h, k, 1), déduire si la zone magnétique concernée (h, k, l) est une première zone magnétique (h) ou une deuxième zone magnétique (1), et est aussi conçu pour, à partir du matériau magnétique saisi, sans évaluer pour cela d'autres signaux magnétiques des zones magnétiques (h, k, 1), déduire si la zone magnétique concernée est une troisième zone magnétique (k) dans laquelle les signaux magnétiques du premier et du deuxième matériau magnétique se différencient nettement en leur valeur absolue, de telle sorte qu'ils ne s'annulent pas lors de leur superposition.

10. Dispositif de vérification (1, 1', 1", 1‴) selon la revendication 9, **caractérisé en ce que** la deuxième zone de champ magnétique se situe dans une zone principale d'un champ magnétique global généré par le dispositif de magnétisation (21, 22; 21', 22'; 21", 22"; 21‴, 22‴; 25, 26; 27), cependant qu'il y a de préférence dans la deuxième zone de champ magnétique une intensité de champ magnétique qui s'élève à au moins 25%, de préférence à au moins 50% et particulièrement de préférence à au moins 75 % d'un intensité maximale locale de champ magnétique du champ magnétique généré par le dispositif de magnétisation (21, 22; 21', 22'; 21", 22"; 21‴, 22‴; 25, 26; 27).

11. Dispositif de vérification selon la revendication 9 ou 10, **caractérisé en ce que** le dispositif de vérification (25, 26; 27) comprend un aimant permanent ou électroaimant agencé d'un côté de la voie de transport, lequel génère ou génère au moins en majeure partie tant la première que la deuxième zone de champ magnétique, ou comprend deux aimants permanents ou électroaimants agencés sur des côtés opposés de la voie de transport (T), lesquels, en concomitance, génèrent ou génèrent au moins en majeure partie tant la première que la deuxième zone de champ magnétique.

12. Dispositif de vérification (1, 1', 1", 1‴) selon une des revendications de 9 à 11, **caractérisé en ce que** le dispositif de vérification (1, 1', 1", 1‴) est conçu pour exécuter un procédé selon une des revendications de 1 à 8.

13. Equipement capteur (20ʺʺ, 20‴ʺ) destiné à la vérification d'un élément de sécurité (11) qui comporte plusieurs zones magnétiques (h, k, 1) ayant des matériaux magnétiques de différente intensité de champ coercitif, comprenant :
- un dispositif de magnétisation (25, 26; 27) conçu pour
mettre de telle façon à disposition, pour l'élément de sécurité (11) à vérifier, une première zone de champ magnétique avec une première direction de champ magnétique et une première intensité de champ magnétique dans une première zone d'une voie de transport (T) que du matériau magnétique, d'un élément de sécurité (11) à vérifier, se trouvant dans la première zone de champ magnétique, peut être magnétisé dans une première direction de magnétisation, et
mettre de telle façon à disposition une deuxième zone de champ magnétique, disposée en aval de la première zone de champ magnétique dans une deuxième zone de la la voie de transport (T), avec une deuxième direction de champ magnétique différente de la première direction de champ magnétique et avec une deuxième intensité de champ magnétique inférieure à la première intensité de champ magnétique que du matériau magnétique, de l'élément de sécurité (11) à vérifier, se trouvant dans la deuxième zone de champ magnétique, peut être magnétisé dans une deuxième direction de magnétisation se différenciant de la première direction de magnétisation, et
- un capteur (23) pour la saisie d'un signal magnétique d'au moins une des zones magnétiques (h, k, l) de l'élément de sécurité (11) à vérifier, lequel est conçu pour saisir des signaux magnétiques qui émanent de la deuxième zone de champ magnétique afin de saisir le signal magnétique pendant que l'élément de sécurité est exposé à la deuxième intensité de champ magnétique de la deuxième zone de champ magnétique,
**caractérisé en ce que** le dispositif de vérification (25, 26; 27) comprend un aimant permanent ou électroaimant (25) agencé d'un côté de la voie de transport (T), lequel génère ou génère au moins en majeure partie tant la première que la deuxième zone de champ magnétique, ou comprend deux aimants permanents ou électroaimants (25, 27) agencés sur des côtés opposés de la voie de transport (T), lesquels, en concomitance, génèrent ou génèrent au moins en majeure partie tant la première que la deuxième zone de champ magnétique, cependant que le un ou les deux aimants se faisant face sont reliés à un agencement en matériau magnétiquement électroconducteur qui conduit le champ magnétique du un ou les deux aimants se faisant face à la première et à la deuxième zone de champ magnétique.
